(19) Europäisches Patentamt / European Patent Office / Office européen des brevets

(11) **EP 2 645 056 B1**

(12) **FASCICULE DE BREVET EUROPEEN**

(45) Date de publication et mention
de la délivrance du brevet:
**21.03.2018 Bulletin 2018/12**

(51) Int Cl.:
***G01S 17/08*** *(2006.01)*   ***G01S 17/48*** *(2006.01)*
***G01S 17/87*** *(2006.01)*   ***G01S 7/48*** *(2006.01)*
***G01C 15/00*** *(2006.01)*

(21) Numéro de dépôt: **13358003.5**

(22) Date de dépôt: **28.03.2013**

(54) **Procédé de mesure télémétrique et télémètre pour la mesure de distances, de longueurs, de surfaces et de niveaux**

Telemetrisches Messverfahren und Telemeter zum Messen von Entfernungen, Längen, Öberflächen und Höhenkoten

Telemetric measuring method and range finder for measuring distances, lengths, surface areas and levels

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.03.2012 FR 1200918**

(43) Date de publication de la demande:
**02.10.2013 Bulletin 2013/40**

(73) Titulaire: **Innovative technology ou in Tech (SARL) 13013 Marseille (FR)**

(72) Inventeurs:
• **Ouaknine, Maurice**
  **13013 Marseille (FR)**
• **Ouaknine, Delphine**
  **13013 Marseille (FR)**

(56) Documents cités:
**EP-A2- 2 037 294     US-A1- 2004 051 860
US-B1- 7 706 573**

**Description**

L'invention se situe dans le domaine de la télémesure dont les applications sont nombreuses telles que, par exemple, architecture, construction et aménagement de bâtiments, travaux publics, travaux forestiers, etc.

Elle concerne un procédé de mesure télémétrique et un télémètre pour la mesure de distances, de longueurs, de surfaces et de niveaux.

D'une manière générale, le procédé et le télémètre selon la présente invention sont utilisables dans toute application où une détermination par télémétrie d'une longueur, d'une largeur, d'une hauteur ou d'une distance quelconque entre deux points de l'espace est recherchée.

Les appareils de mesure de distances portables et sans contact exploitent généralement les propriétés de propagation des ondes acoustiques ou électromagnétiques. Ces appareils sont capables d'émettre et de recevoir une onde dans la direction d'une cible susceptible de renvoyer en écho l'onde incidente. Les caractéristiques de l'onde réfléchie sur ladite cible comparée à celles de l'onde émise permettent de déterminer la distance entre l'émetteur et la cible. Le mode de détermination est généralement la mesure du temps de vol ou du déphasage entre le signal d'émission et le signal de réception. Connaissant la vitesse de propagation de l'onde dans le milieu de mesure, et le temps s'écoulant entre l'émission et la réception, il est aisé d'en déduire une distance.

Cependant, de par son principe, ce type de télémètre, ne peut mesurer directement que la longueur de la droite immatérielle qui le relie à une cible et qui détermine la trajectoire de propagation la plus courte de l'onde incidente. Ladite cible doit être capable de réfléchir l'onde incidente issue du télémètre en empruntant le même trajet mais en sens inverse. En d'autres termes, la mesure de distance entre deux points A et B implique que l'un des deux points appartienne au référentiel de l'appareil.

La mesure dite sans contact nécessite en fait le contact ou la proximité d'au moins un point. Pour mesurer, par exemple, la longueur d'un mur, il faut d'une part, placer l'appareil parallèlement au mur à la hauteur du point A et placer, d'autre part, une cible réfléchissante à la hauteur du point B perpendiculairement au mur. Cette façon d'opérer implique en plus que l'objet à mesurer soit accessible.

Il existe, certes, sur le marché, des appareils tels que ceux utilisés par les géomètres, capables de faire des relevés topographiques. C'est par exemple le cas des théodolites. Mais ils sont très coûteux, très encombrants, difficiles à mettre en oeuvre, etc....

Il a également été proposé des télémètres dit « de poche ».

Par exemple, le document US-2004/051860 décrit un appareil de mesure de distance à laser permettant de mesurer la distance entre deux objets, comprenant deux projecteurs émettant des faisceaux laser source le long d'un axe de projection spécifié vers chacun des objets, un photo-détecteur pour recevoir la lumière réfléchie à partir de la projection de chaque objet, un processeur de mesure de la distance entre un point de référence de l'appareil et chaque objet sur la base du signal de réception de la projection par le photo-détecteur, et un processeur de calcul de distance permettant de calculer la distance entre les objets sur la base des données de distance mesurées par le processeur de mesure de distance et de l'angle formé par les deux axes de projection, et pour lequel l'axe de projection de l'une des projecteurs à un angle variable par rapport à l'autre projecteur.

L'inconvénient de ce dispositif est que bien qu'il propose de déterminer la distance entre deux objets par un calcul trigonométrique simple, il utilise un moyen très complexe et donc couteux à mettre en oeuvre pour déterminer les différents paramètres permettant d'effectuer ce calcul.

Le document US-7.706.573 décrit un procédé de mesure de la distance comprise entre deux points quelconques à partir de la position de l'utilisateur par détermination de l'intervalle et de l'angle entre les deux points. Pour mesurer l'angle entre les deux points, une première méthode utilise un scanner micro-opto-électro-mécanique afin de former une ligne de balayage entre les deux points d'intérêt. Un angle de balayage est déterminé sur la base de la tension alternative appliquée nécessaire pour amener les extrémités de la ligne de balayage afin de coïncider avec les points d'intérêt. La seconde méthode, est un procédé de traitement d'image, appliqué pour déterminer les angles entre les points d'intérêt. Un microprocesseur utilise des images capturées y compris des points d'intérêt, pour déterminer l'angle entre les points. Dans les deux modes, le microprocesseur calcule la distance entre les deux points d'intérêt à l'aide de l'angle déterminé, en même temps que les distances mesurées et envoie la distance calculée à un dispositif d'affichage.

Autrement dit, à l'aide de ce dispositif on procède à une séquence de mesure : l'utilisateur effectue dans un premier temps un premier pointage de la cible A puis dans un second temps modifie à la main l'angle de sorte à pointer la cible B. Une telle opération de mesure s'apparente à l'utilisation d'un théodolite de géomètre. De plus le fait de faire deux mesures successivement (on pointe la cible A puis B) impose que le boîtier du dispositif doit être parfaitement immobile pour ne pas fausser la mesure, il est donc difficile d'en faire un dispositif de « mesure de poche » puisqu'il lui faudrait au minimum un trépied de support pour le maintenir en position.

L'autre inconvénient majeur de ce dispositif est que l'angle d'ouverture maximum proposé est très réduit (de l'ordre de 30°) limitant sérieusement l'usage du dispositif quant à la plage d'utilisation et à la précision de la mesure réalisée.

Le document EP 2 037 294 A2 décrit un appareil permettant de mesurer les cordonnées d'un point (par exemple un trou de perçage) rapportées à un référentiel attaché à une surface contenant ledit point (un mur par exemple), afin de positionner ledit point sur cette surface. Pour cela, une fois plaqué sur la surface, l'appareil définit les coordonnées du point en mesurant par la distance par rapport à un autre mur perpendiculaire et la distance par rapport au sol, en une seule opération. Néanmoins, cet appareil ne calcule pas directement la distance entre deux cibles pointées à distance.

Un objet de l'invention est de solutionner les problèmes découlant des inconvénients susmentionnés et de proposer un appareil de mesure, de petites dimensions, très léger, bon marché, ayant pour but de mesurer sans contact et d'afficher en clair la distance entre deux points de l'espace visés par le pointage d'au moins un faisceau optique (lumineux) tel que, par exemple, un faisceau de type laser ; cet appareil constituant un télémètre portable ou "télémètre de poche" dépourvu de ces inconvénients.

Le procédé et dispositif de télémesure de longueurs et distances selon l'invention ne présentent pas les inconvénients décrits ci-dessus. La mesure de la longueur d'un objet, revient à mesurer la distance spatiale entre les deux points A et B caractérisant par exemple les extrémités de l'objet.

Le procédé selon l'invention repose sur un principe de construction géométrique vectorielle et des opérations sur les vecteurs (addition, soustraction, produit scalaire, norme, etc.). Il est bien connu qu'un vecteur défini dans l'espace par son origine A et son extrémité B peut résulter de la somme vectorielle de deux autres vecteurs d'une origine commune O et dont les extrémités sont respectivement A et B. Le vecteur AB ainsi construit possède, au sens vectoriel, une norme qui est la distance entre A et B que l'on note |AB|. Ladite norme est complètement déterminée si l'on connait la longueur des vecteurs OA et OB et l'angle AÔB. Selon le procédé et dispositif objets de cette invention, les deux points A et B dont on veut connaître la distance spatiale représentent les extrémités des vecteurs OA et OB dont l'origine commune O appartient au dispositif selon l'invention. La mesure de |OA|, de |OB|, ainsi que de l'angle AÔB, permet de déduire |AB|, donc la distance entre A et B, par la relation vectorielle bien connue :

$$|AB|^2 = |OB|^2 + |OA|^2 - 2|OB| \times |OA| \cos(A\hat{O}B) \qquad [1]$$

Suivant le procédé de l'invention, il permet, à partir d'un référentiel O attaché à un dispositif, de générer ou de déterminer au moins deux lignes de visée vers deux points cibles A et B quelconques de l'espace, de mesurer les distances OA et OB, de mesurer l'angle AÔB, de calculer la distance spatiale entre les points A et B, de déterminer les angles de tangage et de roulis du dispositif, et d'en déduire le défaut d'alignement du segment AB sur l'horizontale ou sur la verticale gravitaire.

Selon le procédé de l'invention, étant donné un référentiel de l'espace OXYZ d'origine O, et deux points A et B quelconques de l'espace, les trois points A, O, B, définissant ainsi un triangle AOB, avec un angle AÔB de sommet O, ce procédé étant remarquable en ce que l'on mesure les longueurs OA et OB, que l'on mesure l'angle AÔB, puis on calcule la longueur AB en appliquant par exemple la loi des cosinus sur les triangles quelconques, puis on mesure par rapport au plan horizontal les angles de tangage $\varphi$, (autour de l'axe Y) et de roulis $\theta$ (autour de l'axe X), du plan contenant le triangle AOB, on calcule puis on affiche l'erreur d'horizontalité (ou défaut d'alignement sur l'horizontale) e en utilisant la formule

$$e = (|OA| - |OB|). \sin \varphi + |AB|. \sin \theta$$

Selon un mode de mise en oeuvre du procédé de mesure télémétrique selon l'invention, on pointe les cibles A et B par deux faisceaux lumineux préférentiellement laser (R1 et R2), on détermine ensuite la distance spatiale entre les points A et B, on mesure, par exemple à l'aide d'un inclinomètre ou d'un accéléromètre, d'au moins un axe et de préférence trois axes, l'angle $\varphi$ de tangage et l'angle $\theta$ de roulis, et on calcule, de préférence au moyen d'un calculateur, l'erreur d'horizontalité (ou défaut d'alignement sur l'horizontale) e par la formule :

$$e = (|OA| - |OB|). \sin \varphi + |AB|. \sin \theta$$

Selon un autre mode de réalisation particulier du procédé de mesure télémétrique selon l'invention, pour déterminer la distance spatiale entre les points A et B, on détermine à partir d'un référentiel quelconque O de l'espace deux lignes de visée vers deux points cibles réels A et B quelconques de l'espace, ou vers leur projection virtuelle, dont on veut mesurer l'écartement de sorte que les trois points A,O,B déterminent un triangle quelconque contenu dans un plan de l'espace, d'orientation quelconque, on mesure, d'une part, l'angle d'ouverture ($\alpha$) entre les deux lignes de visée OA et OB et on mesure, d'autre part, la longueur d'au moins une des deux lignes de visée OA ou OB, on calcule et on détermine ensuite la distance spatiale entre les points A et B, en appliquant par exemple la loi de composition vectorielle ou la loi des cosinus, de préférence au moyen d'un calculateur.

Selon un autre mode de mise en oeuvre du procédé de mesure télémétrique selon l'invention, la distance spatiale entre les points A et B est obtenue par triangulation, après avoir pointé les cibles A et B par deux faisceaux lumineux préférentiellement laser (R1 et R2) issus par au moins une source de lumière d'origine O capable d'effectuer un balayage lumineux de la droite AB, on mesure l'angle d'ouverture (α) entre les deux lignes de visée OA et OB, puis on dirige de façon croisée à partir de chacune des extrémités C et D du dispositif respectivement un faisceau auxiliaire (R3) vers la cible A et un faisceau auxiliaire (R4) vers la cible B, après avoir déterminé les angles (δ) et (θ), par exemple respectivement au moyen de codeurs, on calcule et on détermine ensuite la distance spatiale entre les points A et B, appliquant par exemple la règle des sinus ou la loi des cosinus, de préférence au moyen d'un calculateur.

Selon un mode de mise en oeuvre du procédé de mesure télémétrique selon l'invention, la distance spatiale entre les points A et B est obtenue par triangulation :

- après avoir pointé les cibles A et B par les faisceaux principaux (R1 et R2) on valide et on mémorise l'angle d'ouverture (α1) compris entre les lignes de visée OA et OB,

- on ajuste l'ouverture (α2) du compas en agissant sur la branche (4B) par rotation autour du référentiel O de sorte à diriger à partir de l'extrémité C du compas (4) vers la cible A, un faisceau auxiliaire (R3) formant un angle de 90° avec la branche, on valide et on mémorise l'angle (α2) d'ouverture entre les deux lignes de visée OA et OC ;

- on pointe de nouveau la cible B avec le faisceau R2 colinéaire à la branche OC;

- on ajuste l'ouverture du compas en agissant sur l'autre branche par rotation autour du référentiel O de sorte à diriger à partir de l'extrémité D du compas (4) vers la cible B, un faisceau auxiliaire (R4) formant un angle de 90° avec la branche, on valide et on mémorise l'angle d'ouverture entre les deux lignes de visée OB et OD ;

- on calcule à partir des paramètres de dimensions du compas et des trois angles mémorisés, la longueur du segment AB en appliquant un simple calcul trigonométrique.

Selon un autre mode de mise en oeuvre du procédé de mesure télémétrique selon l'invention, la distance spatiale entre les points A et B est obtenue par triangulation :

- après avoir pointé les cibles A et B par les faisceaux principaux (R1 et R2), on valide la mesure de l'angle d'ouverture (α) entre les lignes de visée OA et OB ;
- on calcule les distances OA et OB à partir des rayons réfléchis (R3, R4) respectivement des faisceaux R1 et R2 sur la cible A ou B et qui vient frapper des photo-détecteurs (10a, 10b) placés respectivement sur les faces internes des branches (4A, 4B) du compas (4),
- on focalise les faisceaux réfléchis R3 ou R4 à l'aide d'un objectif (L) sur un détecteur disposé sur chacune des branches (4A, 4B) à une distance (b) connue du référentiel O ;
- on code l'angle d'incidence (θ pour la mesure sur R3) du rayon lumineux R3 qui frappe la surface photosensible du photo-détecteur (10b) selon la position du point d'impact (x) et on déduit la distance OA = R1 : $R_1 = \dfrac{b \sin \theta}{\sin(\theta + \alpha)}$

- de même, on code l'angle d'incidence du rayon lumineux R4 qui frappe la surface photosensible du photo-détecteur (10a) selon la position (x) du point d'impact et on déduit la distance OB = R2 ;
- connaissant α, OA et OB, on calcule et on détermine ensuite la distance spatiale entre les points A et B, de préférence au moyen d'un calculateur.

Selon un autre mode de mise en oeuvre du procédé selon l'invention, la distance spatiale entre les points A et B est obtenue par triangulation, après avoir pointé les cibles A et B par deux faisceaux lumineux préférentiellement laser issus des extrémités des branches, à une distance (r) connue à partir du référentiel O, ces faisceaux lumineux étant parallèles entre eux et perpendiculaires au plan contenant les deux branches de sorte que la distance entre les deux faisceaux lumineux se conserve le long de la trajectoire desdits faisceaux jusqu'à leur impact sur les cibles A et B, on mesure et on valide l'angle d'ouverture (α) entre les deux branches, connaissant la longueur on calcule et on détermine ensuite la distance spatiale entre les points A et B, appliquant par exemple la règle des sinus ou la loi des cosinus, de préférence au moyen d'un calculateur.

L'invention concerne également un télémètre pour la mesure de distances, de longueurs, de surfaces et de niveaux, remarquable en ce qu'il comprend des moyens permettant, à partir d'un référentiel O attaché au télémètre, de générer ou de déterminer au moins deux lignes de visée vers deux points cibles A et B quelconques de l'espace, de mesurer les distances OA et OB, de mesurer l'angle AÔB, de calculer la distance spatiale d entre les points A et B, de déterminer les angles de tangage et de roulis du télémètre, et d'en déduire le défaut d'alignement du segment AB sur l'horizontale ou sur la verticale gravitaire.

Selon un mode d'exécution, le télémètre selon l'invention comprend :

- un moyen permettant de déterminer, à partir d'un référentiel quelconque O de l'espace, deux lignes de visée vers deux points cibles A et B quelconques de l'espace dont on veut mesurer l'écartement de sorte que les trois points A, O, B déterminent un triangle quelconque contenu dans un plan de l'espace, d'orientation quelconque,

- un moyen permettant de mesurer, d'une part, l'angle d'ouverture ($\alpha$) entre les deux lignes de visée OA et OB et on mesure, d'autre part, la longueur des deux lignes de visée OA et OB,

- un moyen permettant de calculer et de déterminer la distance spatiale entre les points A et B, de préférence constitué par un calculateur, en appliquant par exemple la loi de composition vectorielle, la règle des sinus ou la loi des cosinus,

- un moyen permettant de déterminer les angles de tangage et de roulis, et

- un moyen permettant de calculer, à partir de ces valeurs, le défaut d'alignement du segment AB sur l'horizontale ou sur la verticale gravitaire.

Selon un mode de réalisation, le télémètre selon l'invention est constitué par un boîtier comprenant deux branches, ledit boitier ayant ainsi une forme de compas, ces branches étant articulées autour d'un axe de rotation, et comportant, de manière connue en soi, un dispositif générateur de faisceaux lumineux, capable de réaliser deux faisceaux de pointage divergents (R1, R2) à direction colinéaire avec la longueur desdites branches, à partir d'un point référentiel d'origine O, et agencé pour permettre de régler l'angle de divergence ($\alpha$) compris entre 0° et 180° de ces faisceaux divergents, de sorte que ces derniers peuvent être pointés sur des points cibles réels A et B distants l'un de l'autre, ou vers leur projection virtuelle.

Selon un mode de réalisation, le moyen permettant de déterminer les angles de tangage et de roulis est constitué par un inclinomètre ou accéléromètre, préférentiellement trois axes, intégré dans une des branches.

Selon une disposition caractéristique, chaque branche est dotée de moyens permettant d'émettre à son extrémité libre, un faisceau lumineux (R3, R4), auxiliaire de triangulation à direction tournante autour de ladite extrémité libre et en ce qu'il comprend des boutons rotatifs munis de codeurs qui réalisent les rotations desdits faisceaux auxiliaires (R3, R4) et codent l'angle de rotation.

Selon un mode de réalisation, le télémètre selon l'invention comprend des photo-détecteurs de réception des rayons réfléchis R3, R4 par exemple constitués par des PSD (Position Sensitive Detector) ou un réseau linéaire de diode ou préférentiellement un CCD (Charged Coupled Device).

Selon un mode d'exécution du télémètre selon l'invention, les deux branches du boîtier sont articulées autour d'un codeur angulaire de type potentiomètre, le corps dudit codeur angulaire étant fixé à l'extrémité de l'une des branches du compas, tandis que l'extrémité de l'autre branche est solidaire de l'axe de rotation du codeur angulaire, permettant ainsi de connaitre, à tout moment, la valeur de l'angle d'ouverture desdites branches.

Les buts, caractéristiques et avantages ci-dessus, et d'autres encore, ressortiront mieux de la description qui suit et des dessins annexés dans lesquels :

- la figure 1a est une représentation schématique d'un exemple de mise en oeuvre du procédé de l'invention ;

- la figure 1b est une représentation schématique d'un autre exemple de mise en oeuvre du procédé ;

- la figure 1c est une vue schématique montrant deux pointages de mesures à distance de la hauteur et de la largeur d'une surface ;

- la figure 2a illustre un mode d'exécution du télémètre selon l'invention ;

- la figure 2b représente une variante d'exécution du dispositif illustré à la figure 2a ;

- la figure 2c représente un procédé et un mode de fonctionnement du dispositif collaborant avec un inclinomètre 3 axes, permettant ainsi de contrôler l'horizontalité ou la verticalité du segment AB et de déterminer le cas échéant, son inclinaison ;

- la figure 3 représente un mode d'exécution préféré du télémètre selon l'invention ;

- la figure 4a est une vue à caractère schématique montrant, comparativement, des mesures de l'écartement entre deux murs, opérées par un dispositif de l'art antérieur et par le télémètre selon l'invention ;

- la figure 4b est une vue à caractère schématique illustrant, deux méthodes de mesures possibles de la distance comprise entre deux murs, au moyen du dispositif selon l'invention ;

- la figure 5 est une vue à caractère schématique illustrant, comparativement, des mesures de la distance comprise entre un plafond et le sol opérées par un dispositif de l'art antérieur et par le télémètre selon l'invention ;

- la figure 6 est une vue à caractère schématique illustrant l'utilisation du télémètre selon l'invention pour mesurer une surface ;

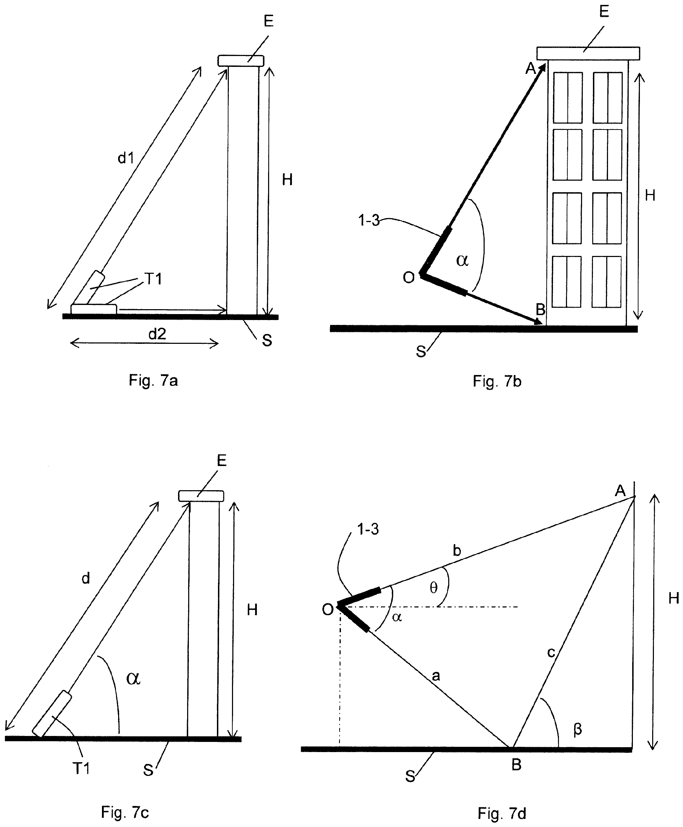

- le figure 7a est une vue à caractère schématique illustrant la mesure de la hauteur d'un bâtiment à l'aide d'un télémètre T1 selon l'art antérieur ;

- la figure 7b est une vue à caractère schématique illustrant la mesure de la hauteur d'un bâtiment à l'aide d'un télémètre selon l'invention ;

- la figure 7c est une vue à caractère schématique illustrant la mesure de la hauteur d'un bâtiment au moyen d'un télémètre selon l'art antérieur ;

- la figure 7d est une vue à caractère schématique illustrant la mesure de la hauteur d'un bâtiment, prise à distance de ce dernier avec un "compas télémétrique" selon l'invention ;

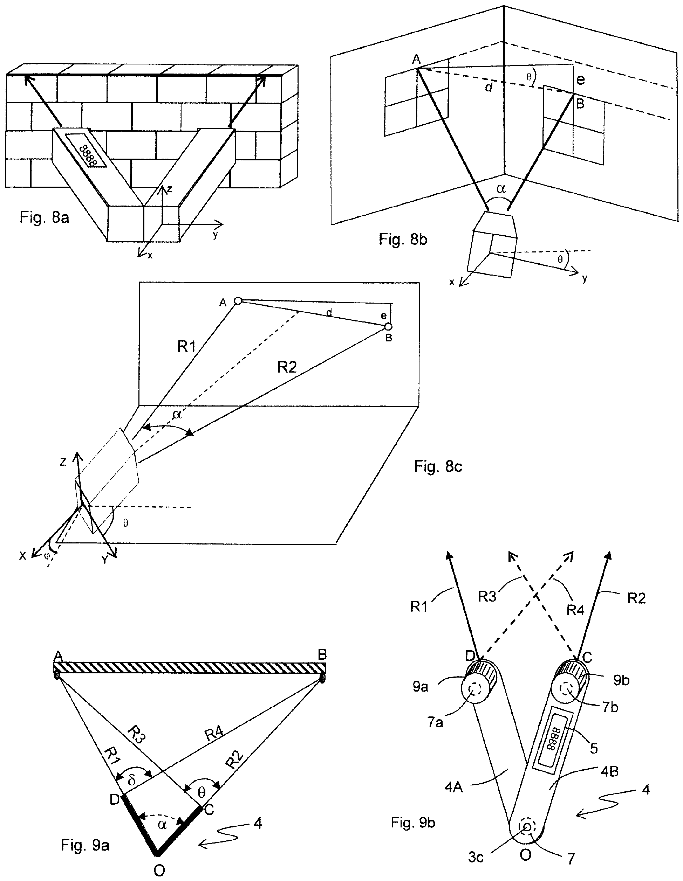

- la figure 8a montre un exemple de mise en oeuvre annexe et d'usage avantageux du dispositif et procédé selon l'invention par exemple pour le contrôle de l'horizontalité d'un mur. Sur ce mode de fonctionnement, la mesure de distances n'est pas activée ;

- la figure 8b illustre un mode de fonctionnement du dispositif permettant de contrôler l'alignement en hauteur de deux fenêtres sur deux murs différents et de calculer leur décalage ;

- la figure 8c montre un exemple de mesure de l'horizontalité d'un segment AB sur un mur à partir d'un point de l'espace arbitraire

- la figure 9a est une représentation schématique d'un procédé de mesure par triangulation associé à la mesure des longueurs des faisceaux de pointage selon l'invention ;

- la figure 9b représente un mode d'exécution du télémètre selon l'invention doté du procédé de triangulation pour la mesure des deux distances simultanées entre l'origine du référentiel O et les points de l'espace A et B dont on veut mesurer l'écart ;

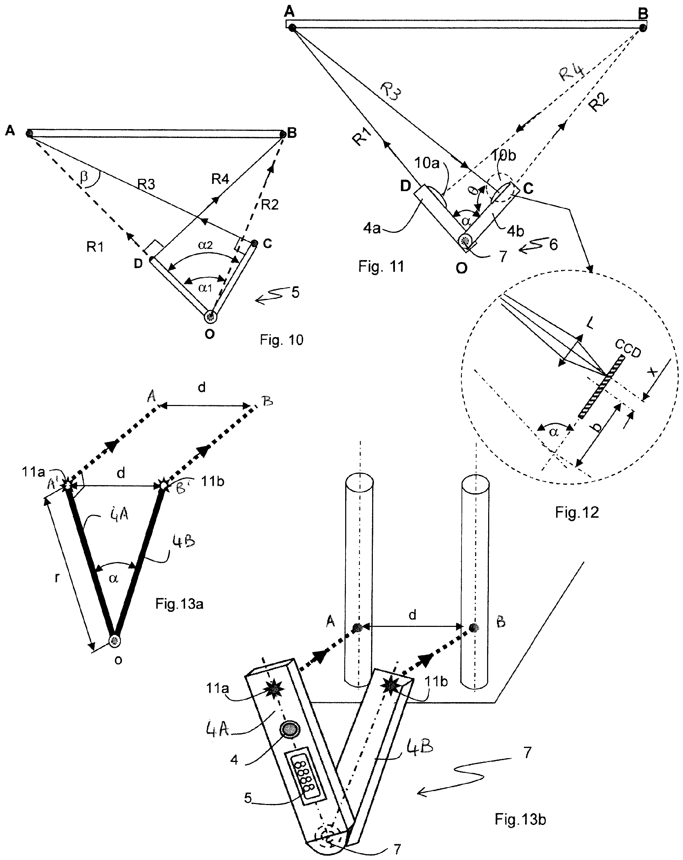

- la figure 10 représente un autre mode d'exécution du télémètre selon l'invention doté d'un procédé de triangulation simplifié pour la mesure des deux distances entre le référentiel O et les cibles dans un mode séquentiel ;

- la figure 11 représente un mode d'exécution particulier du télémètre selon l'invention doté d'un procédé de triangulation très automatisé et d'usage aisé pour la mesure des deux distances simultanément ;

- la figure 12 représente un détail du dispositif permettant de mettre en oeuvre le procédé selon la figure 11, montrant le procédé et le dispositif pour la triangulation optique ;

- la figure 13a représente un autre procédé du télémètre selon l'invention permettant la réalisation d'un télémètre très bon marché et d'usage aisé pour la mesure de petites longueurs ;

- la figure 13b représente un autre mode d'exécution du télémètre selon le procédé simplifié pour la mesure de petites longueurs.

On se reporte auxdits dessins pour décrire des exemples avantageux, mais nullement limitatifs, de réalisation du dispositif et de mise en oeuvre du procédé de l'invention.

Selon ce procédé, à partir d'un référentiel O attaché à un dispositif, on génère ou on détermine au moins deux lignes de visée vers deux points cibles A et B quelconques de l'espace, on mesure les distances OA et OB, on mesure l'angle AÔB, de calculer la distance spatiale entre les points A et B, on détermine les angles de tangage et de roulis du dispositif, et on en déduit le défaut d'alignement du segment AB sur l'horizontale ou sur la verticale gravitaire.

Selon un autre mode de mise en oeuvre, étant donné un référentiel de l'espace OXYZ d'origine O, et deux points A et B quelconques de l'espace, les trois points A, O, B, définissant ainsi un triangle AOB, avec un angle AÔB de sommet O, on mesure les longueurs OA et OB, on mesure l'angle AÔB, puis on calcule la longueur AB en appliquant par exemple la loi des cosinus sur les triangles quelconques, puis on mesure par rapport au plan horizontal les angles de tangage φ, (autour de l'axe Y) et de roulis θ (autour de l'axe X), du plan contenant le triangle AOB , on calcule puis on affiche l'erreur d'horizontalité (ou défaut d'alignement sur l'horizontale) e en utilisant la formule

$$e = (|OA|-|OB|).\ \text{Sin}\ \ \varphi + |AB|.\ \text{Sin}\ \theta$$

Selon un exemple de mise en oeuvre du procédé, on pointe les cibles A et B par deux faisceaux lumineux préférentiellement laser (R1 et R2), on détermine ensuite la distance spatiale entre les points A et B, on mesure, par exemple à l'aide d'un inclinomètre ou d'un accéléromètre, d'au moins un axe et de préférence trois axes, l'angle φ de tangage et l'angle θ de roulis, et on calcule, de préférence au moyen d'un calculateur, l'erreur d'horizontalité (ou défaut d'alignement sur l'horizontale) e par la formule :

$$e = (|OA|-|OB|).\ \text{Sin}\ \ \varphi + |AB|.\ \text{Sin}\ \theta$$

Selon un mode de réalisation du procédé permettant de déterminer la distance spatiale entre deux points A et B, on détermine à partir d'un référentiel quelconque O de l'espace deux lignes de visée vers deux points cibles réels A et B, ou vers leur projection virtuelle, quelconques de l'espace dont on veut mesurer l'écartement de sorte que les trois points A, O, B déterminent un triangle quelconque contenu dans un plan de l'espace, d'orientation quelconque, on mesure, d'une part, l'angle d'ouverture α entre les deux lignes de visée OA et OB et on mesure, d'autre part, la longueur d'au moins une des deux lignes de visée OA ou OB, on calcule et on détermine ensuite la distance spatiale entre les points A et B, en appliquant par exemple la loi de composition vectorielle ou la loi des cosinus, de préférence au moyen d'un calculateur.

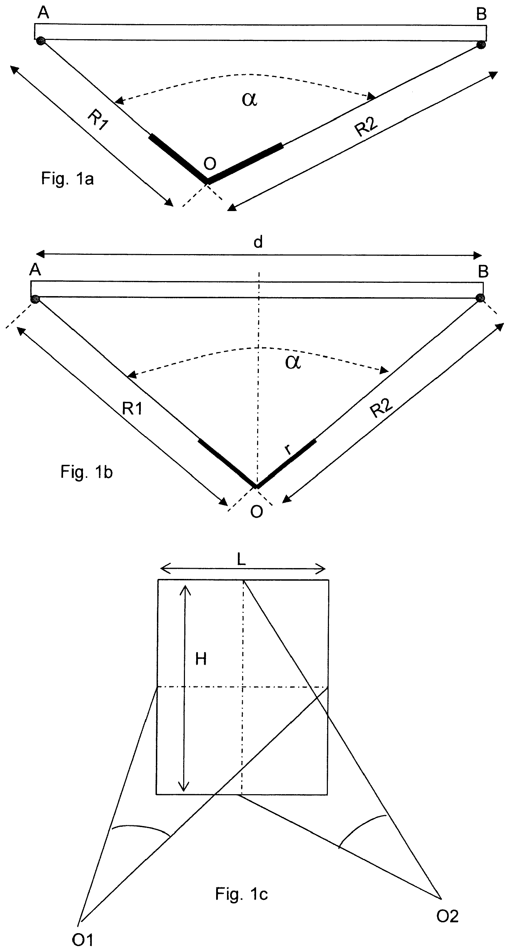

En se reportant à la figure 1a, qui est une représentation schématique du procédé, on considère que la distance d à mesurer est l'écartement des points de l'espace A et B. Ladite distance d, est la norme |AB| du vecteur AB résultant de la composition vectorielle des vecteurs OA et OB de même origine arbitraire O, la dite norme |AB| est déterminée sans ambigüité si l'on connait l'angle AÔB dénommé ici α et les normes des vecteurs OA et OB, dénommés ici respectivement R1 et R2. Dans ce cas, la distance d est déterminée par exemple par la loi vectorielle :

$$d^2 = R_1{}^2 + R_2{}^2 - 2R_1 R_2 \cos \alpha$$

La figure 1b illustre schématiquement le cas particulier où le point de divergence O et les points de l'espace A et B dont on veut mesurer l'écartement constituent les sommets d'un triangle isocèle où OA=OB=R1=R2=R. Dans ce cas, il suffit de connaître deux données pour déterminer d : α et R, on a alors :

$$d = 2R\ sin\ \frac{\alpha}{2}$$

La figure 1c montre deux pointages de mesure à distance d'une hauteur H et d'une largeur L d'une surface correspondant, par exemple, à une fenêtre. Pour la clarté du dessin, les mesures de H et de L s'effectuent à partir de deux points de vue O1 et O2 différents. Les mesures étant relatives, elles auraient pu être exécutées à partir d'un même point de vue quelconque de l'espace.

Le télémètre selon l'invention comprend :

- un moyen permettant de déterminer, à partir d'un référentiel quelconque O de l'espace, deux lignes de visée vers deux points cibles A et B quelconques de l'espace dont on veut mesurer l'écartement de sorte que les trois points A, O, B déterminent un triangle quelconque contenu dans un plan de l'espace, d'orientation quelconque,
- un moyen permettant de mesurer, d'une part, l'angle d'ouverture ($\alpha$) entre les deux lignes de visée OA et OB et on mesure, d'autre part, la longueur d'au moins une des deux lignes de visée OA ou OB ;
- un moyen permettant de calculer et de déterminer ensuite la distance spatiale entre les points A et B, en appliquant par exemple la loi de composition vectorielle ou la loi des cosinus, ce moyen étant par exemple constitué par un calculateur.

Selon un premier exemple de réalisation, le dispositif selon l'invention, désigné dans son ensemble par la référence 1, comprend un boîtier 1A comportant, de manière connue en soi, un générateur de faisceaux lumineux, capable d'émettre deux faisceaux divergents R1, R2 à partir d'un point référentiel d'origine O, et agencé pour permettre de régler l'angle de divergence $\alpha$ de ces faisceaux divergents, de sorte que ces derniers peuvent être pointés sur des points cibles A et B distants l'un de l'autre, ledit appareil de mesure télémétrique comportant un moyen capable de mesurer l'angle de divergence des faisceaux lumineux, et un moyen permettant de mesurer au moins une distance entre ledit point référentiel d'origine O et un point particulier du plan contenant les points A et B.

De manière préférée et avantageuse, le générateur de faisceaux lumineux est constitué par un module 8 de pointage générant des faisceaux ou rayons laser R1, R2 associé à une mesure de distance par exemple de type acoustique ou électromagnétique.

On observe que, dans le cas particulier où les distances OA et OB sont égales, de sorte que le triangle AOB soit isocèle, le procédé selon l'invention s'apparente à un compas utilisé en construction géométrique. La distance d entre les pointes des deux branches du compas est donnée par l'angle d'ouverture $\alpha$ du compas et par la longueur r des branches selon la formule trigonométrique d = 2r.Sin ($\alpha$/2).

Par conséquent pour bien montrer l'intérêt du procédé et du dispositif selon l'invention, notamment la facilité de mise en oeuvre de celle-ci, il suffit d'assimiler le dispositif à un compas virtuel dont les branches se prolongeraient par deux rayons lumineux tels que deux rayons laser se projetant exactement sur les points A et B, et dont on sait déterminer l'angle de divergence $\alpha$ ainsi que la longueur de chacune des deux branches.

Un avantage majeur de l'invention réside dans le fait que les deux faisceaux laser (ou autres faisceaux lumineux) peuvent réaliser en même temps, les fonctions de pointage et de télémesure de distance. Ce télémètre permet en outre de visualiser, à distance, les points d'impacts des rayons émis par les sources laser.

Selon un mode d'exécution très avantageux, le télémètre intègre un dispositif micro-électromécanique de technologie MEMS par exemple, capable de fournir aussi l'orientation ou l'inclinaison du segment AB par rapport à la verticale gravitaire.

On décrit ci-après différents exemples de conformation du télémètre selon l'invention.

On précise que, dans la description de ces exemples de réalisation, on ne décrira pas en détails le système de production des deux faisceaux laser (ou autres faisceaux lumineux) divergents R1 et R2, qui sont, soit générés à partir de deux sources laser distinctes, soit à partir d'une seule source laser avec division à l'aide de miroirs semi-réfléchissants, prismes, et jeu de miroirs, que l'homme de l'art sait maîtriser. Il en est de même du mécanisme de divergence des faisceaux qui peut s'effectuer par exemple par rotation de miroirs. S'agissant des procédés de mesure de distances associées aux deux faisceaux de pointage, qui relèvent de principes connus ou dont l'usage dans le dispositif selon l'invention ne présente pas un caractère innovant en soi, ne seront pas détaillées. Il en est ainsi des systèmes de mesure de distance, basés sur le principe de détection d'un écho sur la cible de signal acoustique (ultrasons) ou électromagnétique (laser par exemple), d'une onde incidente émise dans la direction de la cible, ou qu'il s'agisse d'un tout autre procédé de mesure de distance tel que la mesure de l'angle de réflexion sur un obstacle d'une onde incidente. Généralement, on trouve dans le commerce des modules qui remplissent la fonction pointage d'un objet, à l'aide d'un laser par exemple, et mesure de la distance du module audit objet. Nous décrirons cependant un procédé de mesure des distances R1, R2 par triangulation dont la réalisation tire un grand avantage dans les mécanismes mis en place d'une des variantes du dispositif selon l'invention et dont l'usage associé à la fonction de pointage dudit dispositif est de nature à simplifier la fabrication et à en réduire le coût.

On ne décrira pas le fonctionnement du composant électronique servant à mesurer l'inclinaison du télémètre selon un, deux ou trois axes. Il s'agit préférentiellement d'inclinomètres en technologie MEMS, bien connus de l'homme de l'art.

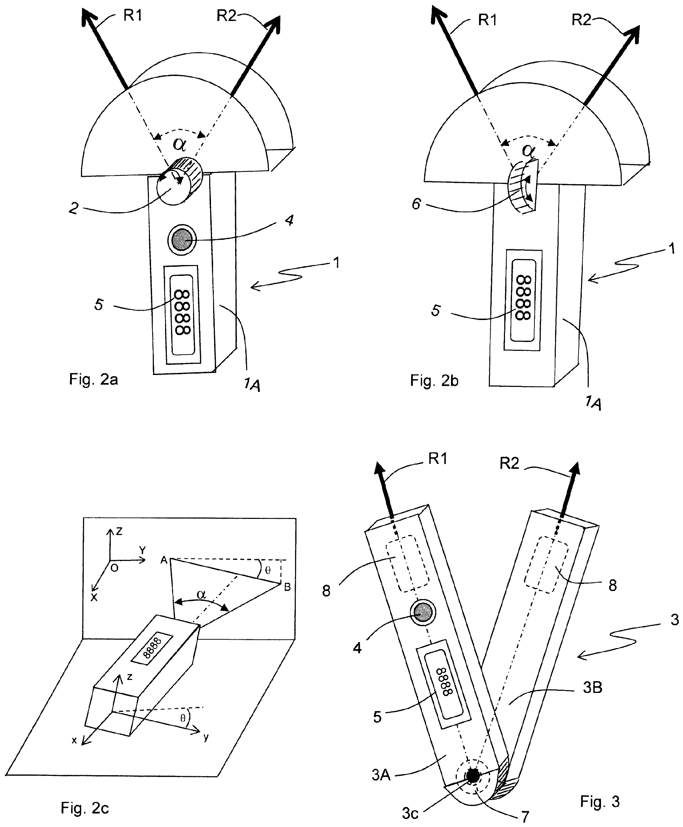

Selon le mode d'exécution représenté à la figure 2a, le boîtier 1A affecte une forme parallélépipédique allongée ou sensiblement parallélépipédique.

De préférence, il comporte des bords arrondis, pour une prise en main confortable.

Le boîtier 1A renferme un microcalculateur de type microprocesseur doté de mémoires de données et de programmation connu des hommes du métier. Sur l'une de ses faces le boîtier comporte un bouton poussoir 4 pour l'activation de la mesure, un bouton rotatif 2 de commande et de contrôle de l'angle d'ouverture $\alpha$ des deux faisceaux

laser R1, R2, et un afficheur 5 permettant d'afficher les résultats des mesures opérées. Ledit bouton rotatif 2 est lié mécaniquement ou autrement à un codeur angulaire bien connu de l'homme de l'art. Ce codeur fournit au calculateur, le codage de l'angle $\alpha$.

Dans une procédure de mesure de la distance entre deux points A et B de l'espace, l'opérateur tient le dispositif 1 dans une main et ajuste de l'autre main l'angle de divergence $\alpha$ des deux faisceaux R1, R2, à l'aide du bouton 2, de façon à ce que l'impact desdits faisceaux se superpose sur les points A et B, puis il valide la mesure en pressant le bouton poussoir 4. La mesure est disponible sur l'afficheur 5 du calculateur.

La figure 2b représente une variante avantageuse de la réalisation précédente, caractérisée en qu'il comporte une roulette 6 qui peut être roulée pour ajuster l'angle $\alpha$ et pressée transversalement à l'aide du pouce ou d'un autre doigt de la main pour valider la mesure de sorte que toute la procédure de mesure s'exécute d'une seule main.

Dans ce mode de réalisation, la roulette 6 remplit donc à la fois, la fonction du bouton rotatif 2 et du bouton poussoir 4 du mode d'exécution illustré à la figure 2a.

Selon une variante avantageuse de réalisation du télémètre, le boîtier 1A renferme aussi 3 accéléromètres disposés orthogonalement selon les 3 axes x, y, z du parallélépipède 1A tel qu'il est illustré figure 2c. Lesdits accéléromètres, en technologie MEMS sont proposés dans le commerce sous forme d'un unique module 3 axes. Ledit module qui est soumis à l'accélération gravitaire est capable de mesurer l'assiette d'une face quelconque du dispositif 1A selon l'invention, comme par exemple la face de référence comprenant l'afficheur 5 qui est parallèle au plan contenant les faisceaux R1 et R2, de sorte que l'on détermine l'assiette du plan contenant le triangle AOB. Dans cet agencement, le module accéléromètre 3 axes est aussi appelé inclinomètre 3 axes. Le dispositif ainsi agencé, peut mesurer l'inclinaison de la droite AB par rapport à la verticale gravitaire quel que soit la position et l'orientation dans l'espace du dispositif selon l'invention. Selon cette variante, Il est ainsi possible de mesurer la distance |AB| et les coordonnées de sa projection sur l'axe gravitaire et l'axe horizontal. Le fait remarquable est que le dispositif ainsi agencé, détermine 3 angles que par analogie à la navigation, on désigne par : l'angle de lacet $\alpha$ autour de OZ, l'angle gravitaire de tangage autour de l'axe OY et l'angle gravitaire de roulis autour de l'axe OX. Avec les deux mesures de distances, R1 et R2, le dispositif selon cette variante de l'invention dispose donc de 5 degrés de liberté.

La figure 3 représente une variante de réalisation préférentielle du dispositif selon l'invention selon laquelle le boîtier comprend deux parties ou branches 3A, 3B, reliées par l'intermédiaire de l'une de leurs extrémités au moyen d'une articulation 3C. Ledit boîtier ayant ainsi la forme d'un compas 3. Ledit compas télémétrique comporte deux branches préférentiellement de même longueur 3A, 3B articulées autour d'un codeur angulaire 7 de type potentiomètre par exemple, qui joue aussi le rôle d'axe de rotation. Chacune des branches 3A, 3B, est dotée d'un module 8 de pointage laser associé à une mesure de distance, constitué par un émetteur laser connu en soi. Ladite mesure de distance est une fonction intégrée au module 8 dont le principe repose sur la mesure de temps de vol par exemple d'une onde électromagnétique (laser, infra rouge, etc.), ou acoustique (ultrasons) ou sur un tout autre principe comme une triangulation optique. Le microcalculateur peut être logé dans l'une quelconque desdites branches tandis que le bouton poussoir d'activation 4 et l'afficheur 5 équipent également l'une des deux branches du compas, préférentiellement, la branche qui renferme le microcalculateur et sur la face du parallélépipède qui est parallèle au plan contenant les deux faisceaux R1 et R2. Le dispositif inclinomètre de technologie préférentiellement MEMS peut être intégré dans l'une quelconque des deux branches.

Dans une procédure de mesure de distance entre deux points de l'espace A et B :

- on oriente le compas en le tenant des deux mains, dans la direction de l'objet à mesurer ;

- on écarte les branches du compas de sorte à pointer simultanément les deux faisceaux R1, R2 sur les points de l'espace A et B ;

- on presse le poussoir 4 pour déclencher la mesure.

Un des autres avantages d'un tel agencement sous forme de compas télémétrique 3, réside dans le fait qu'il peut aussi servir de compas géométrique en aidant au traçage à distance de formes circulaires. Après avoir réglé l'angle $\alpha$ correspondant au rayon désiré, il suffit de diriger un des faisceaux, R1 issu de la branche 3A par exemple sur le centre choisi et de faire pivoter la branche 3B de 360° tout en maintenant constant l'angle $\alpha$ et le pointage central par R1.

Un autre avantage du compas télémétrique outre sa fonction de mesure de distances entre deux points quelconques de l'espace, réside dans son utilisation comme simple rapporteur d'angle pour déterminer par exemple directement la pente d'une toiture ou celle d'un escalier ou d'une échelle, etc.

Quel que soit le mode d'exécution de l'appareil télémétrique selon l'invention, celui-ci peut mesurer la distance comprise entre des points A et B, par le pointage de deux faisceaux laser R1, R2 (ou autres faisceaux lumineux) formant entre eux un angle divergent $\alpha$, compris entre 0° et 180°.

Lorsque l'angle est de 180°, il s'agit d'un angle plat $\beta$, ledit dispositif émettant, dans ce cas, deux faisceaux laser, alignés et opposés.

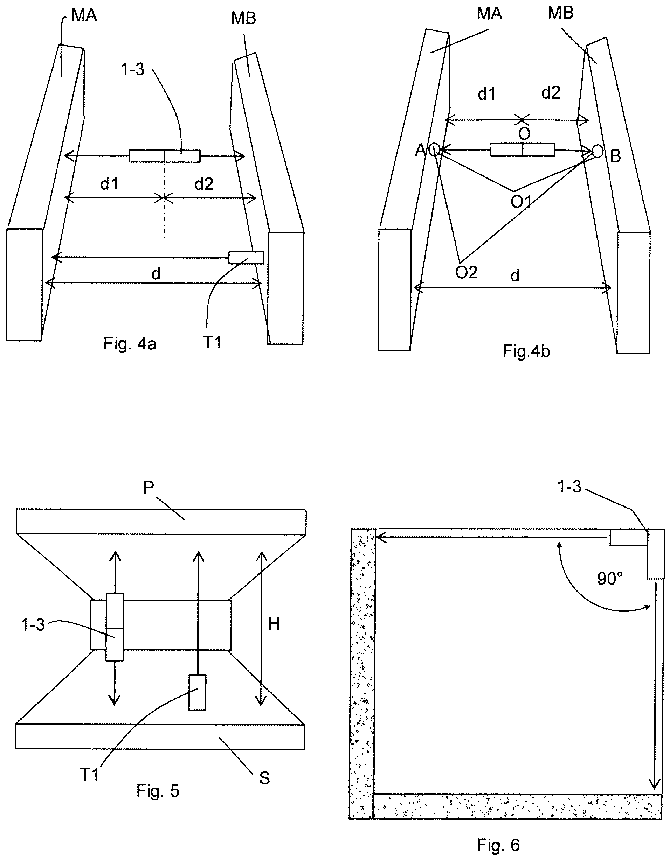

La figure 4a montre les méthodes comparées de mesure de l'écartement d entre deux murs MA et MB :

- par un dispositif de mesure télémétrique de l'art antérieur T1, à faisceau unique R3 représenté au premier plan, et,

- par le télémètre à double faisceaux R1, R2 selon l'invention, représenté en arrière-plan.

Dans le premier cas, le dispositif doit être tenu contre un mur, avec souvent des contraintes et des risques d'erreurs de positionnement, alors que dans l'autre situation, l'opérateur manoeuvre le dispositif confortablement à partir de n'importe quel endroit de l'espace situé entre les deux murs. La mesure de d étant la somme de d1 et de d2, elle est invariante par translation du dispositif 1 selon l'invention, donc insensible aux déplacements de l'opérateur. En d'autres termes, la mesure avec le dispositif selon l'invention, ne dépend pas de façon critique de sa position dans l'espace. Quand la mesure implique une parfaite perpendicularité à une surface par exemple, on pourra avantageusement procéder dans des directions différentes à plusieurs mesures pour en extraire un minimum de la série de mesures. Le calculateur embarqué peut être programmé dans ce but. Il est intéressant aussi de souligner que par le procédé de l'invention, il est plus aisé d'accéder aux angles de la pièce en raison du fait qu'il est possible de pointer sans ambiguïté par l'un des faisceaux R1 ou R2, l'angle entre deux murs, pour une mesure de la diagonale d'un sol ou d'un plafond, par exemple. Un avantage est la possibilité de rechercher le milieu de la pièce en translatant le dispositif selon l'invention jusqu'à l'obtention de l'égalité de d1 et d2.

La figure 4b montre qu'il n'est pas obligatoire de réaliser un angle ouvert à 180° pour mesurer par exemple l'écartement de deux murs MA, MB. Quelle que soit la position de l'observateur en O, 01 ou 02, et quel que soit l'angle de divergence des faisceaux divergents, pourvu que lesdits faisceaux réalisent deux points d'impacts A et B visibles respectivement sur chaque mur, la mesure d'écartement d entre A et B est valide.

La figure 5 est une illustration du procédé de mesure comparé, de la hauteur d'un plafond P, c'est-à-dire de la distance d comprise entre ce dernier et le sol ou plancher S :

- avec un télémètre T1 de l'art antérieur (partie droite de la figure 5) et,
- le dispositif de mesure télémétrique de l'invention représenté avec une ouverture de l'angle $\alpha$ à 180° (partie gauche de figure).

Alors que le télémètre T1 de l'art actuel doit obligatoirement être placé et mis en oeuvre très inconfortablement au sol, l'usage très innovant du dispositif 1-3 est une solution présentant plusieurs avantages, dont la précision et le confort d'utilisation. Ledit dispositif peut en effet être mis en oeuvre à partir de n'importe quelle hauteur, dont celle correspondant à la taille de l'utilisateur. Comme pour l'illustration de la figure 4a ou 4b, la mesure effectuée par le dispositif selon l'invention résulte de la somme de deux mesures de part et d'autre du dispositif 1-3. Ladite somme, est constante et invariante par translation sur les trois directions XYZ de l'espace. Il en résulte, un grand confort d'utilisation et une réduction significative des erreurs de mesure.

La figure 6 est une illustration remarquable de l'usage du dispositif préférentiellement 3 selon l'invention pour mesurer simultanément la longueur et la largeur d'un plan d'une pièce, pour en déduire sa surface. Il suffit d'ajuster à 90° l'angle d'ouverture $\alpha$ du dispositif selon l'invention ayant la forme d'un compas représenté à la figure 3 et de placer ledit dispositif dans l'angle du plan dont on veut mesurer la surface. Le microcalculateur embarqué effectue automatiquement le produit de la longueur par la largeur dudit plan.

Le module 8 de pointage de l'une des branches 3A du compas permet de mesurer la longueur de l'un des côtés de la pièce, tandis que le module 8 de pointage équipant la seconde branche 3B du compas permet de mesurer la longueur du côté de ladite pièce perpendiculaire au précédent.

Les figures 7a, 7b, 7c, 7d représentent les diverses procédures et dispositifs, de mesure d'une hauteur d'un bâtiment, selon l'état de l'art et selon l'invention.

La figure 7a illustre le procédé de mesure par Pythagore de la hauteur H d'un bâtiment, à l'aide d'un télémètre T1 de l'art antérieur, successivement placé dans deux positions : dans un premier temps, l'utilisateur place en retrait du bâtiment et au sol, ledit télémètre et l'oriente vers le haut du bâtiment puis il déclenche une première mesure d1. Il oriente ensuite ledit télémètre, sur le bas du mur du bâtiment, parallèlement au sol et tout en gardant la même position référentielle, il déclenche une deuxième mesure d2. Le triangle rectangle à la base du bâtiment est entièrement déterminé. La hauteur H est donnée par la relation de Pythagore. Cette procédure d'évaluation en deux temps de la hauteur H est fastidieuse, inconfortable et sujette à erreurs.

La figure 7b illustre le procédé selon l'invention, de mesure de la hauteur H qui ne présente pas les inconvénients décrits ci-dessus. L'utilisateur qui met en oeuvre le dispositif 1-3 à sa hauteur, par exemple, pointe simultanément les points A(en haut) et B (au pied de l'édifice), puis il déclenche la mesure. Les côtés OA, OB, et l'angle $\alpha$ étant connus, le calcul de H= |AB|, est immédiat.

La figure 7c représente un autre mode de mesure connu selon lequel les télémètres intègrent un inclinomètre électronique qui est capable de coder l'angle d'inclinaison de l'appareil par rapport à la verticale gravitaire ou par rapport à l'horizontale terrestre. Grâce à cet agencement, la mesure peut s'effectuer en un seul temps. Il suffit d'orienter le télémètre, qui doit être placé impérativement sur le sol, et pointer vers le haut de l'immeuble et de déclencher la mesure d. Le triangle rectangle d'angle $\alpha$ donné par l'inclinomètre, et de côté d connu est parfaitement déterminé. La hauteur H est immédiatement calculée. Une autre possibilité réside dans le fait que l'on n'a plus besoin de la distance d2, donc de pointer le bas de l'immeuble qui peut être inaccessible ou masqué par exemple par des véhicules. Cependant, la hauteur calculée est toujours entre le haut pointé et le plan perpendiculaire à l'édifice et qui contient le télémètre. Le calcul de la hauteur totale implique que le télémètre soit obligatoirement posé et mis en oeuvre à la base, donc au sol.

La figure 7d illustre le procédé selon l'invention, de mesure de la hauteur H dans le cas particulier où le bas de l'édifice est masqué, sans présenter les inconvénients décrits ci-dessus. Dans l'une des branches 3A, 3B du compas télémétrique selon l'invention, est placé un inclinomètre préférentiellement 3 axes. Grâce à l'intégration d'un tel composant coopérant avec le dispositif de mesure de l'invention, il est possible de mesurer n'importe quelle hauteur de bâtiment avec un télémètre placé à n'importe quelle hauteur, dont la hauteur d'homme, en pointant d'une part, l'un (R1) des faisceaux vers le haut dudit bâtiment, et d'autre part, le second faisceau ou rayon R2 sur n'importe quel point du sol et non plus sur le bas dudit bâtiment.

On connaît en effet l'angle $\alpha$, et les côtés du triangle b, c, a. L'inclinomètre fournit l'angle $\theta$ d'inclinaison de la branche supérieure du compas par rapport à l'horizontale. Pour déterminer la hauteur H, il faut, connaissant a, déterminer $\beta$ car H = c.sin $\beta$.

Il vient que :

$$H = c\sin(\theta + \arcsin\frac{a\sin\alpha}{c})$$

L'expression est vérifiée pour tout angle d'ouverture du dispositif, notamment pour une ouverture à angle plat du dispositif, où l'expression se simplifie : les points A, O, B étant alignés, sin$\alpha$=sin(180°)=0 et arcsin(0)=0, dans ce cas, $\beta$ = $\theta$, de sorte que l'expression ci-dessus donne : H = a.sin $\theta$. Il suffit donc de pointer avec le dispositif en angle plat, le point haut A et en un point B quelconque au sol pour déterminer immédiatement la hauteur H.

La figure 8a illustre le procédé selon l'invention, de contrôle par exemple de l'horizontalité d'un mur. Le dispositif intègre un inclinomètre 3 axes sur une des branches du compas 3. Ledit inclinomètre est capable de déterminer l'assiette de n'importe quelle face du dispositif. Il peut particulièrement dire si les bords de la face de référence sont horizontaux ou verticaux il peut aussi déterminer l'assiette, donc l'orientation du plan du triangle AOB qui est parallèle à la face de référence du dispositif 1-3.

La figure 8b illustre un mode de fonctionnement du dispositif selon l'invention où l'on cherche à mesurer le défaut d'alignement horizontal entre deux fenêtres placées chacune sur un mur différend. Pour simplifier, nous supposerons que l'opérateur se place entre les deux fenêtres. De ce fait, même si le télémètre pointe vers le haut avec un angle de tangage important, seul est pris en compte l'angle de roulis $\theta$ autour de l'axe x et qui exprime la rotation vers la droite du dispositif pour placer plus bas le faisceau de droite. La droite AB est aussi inclinée du même angle $\theta$. Connaissant la distance D=|AB| et $\theta$, le défaut d'alignement est : e = d.Sin $\theta$. Cet exemple illustre le fait que la fonction première du dispositif qui celle de mesurer la distance entre deux points quelconques devient secondaire mais nécessaire pour déterminer un défaut d'alignement par exemple.

La figure 8c est une illustration générale du contrôle d'horizontalité (ou de verticalité) d'un segment AB à partir d'un point de vue critique puisque le télémètre selon l'invention n'est pas au droit dudit segment, il est très décalé latéralement réalisant une distance R2 plus grande que R1. De plus la mesure se fait en contre plongée, i.e. avec un angle de tangage important. Dans ce cas général, l'erreur d'horizontalité e est donnée par la condition :

$$(R1-R2) \sin \varphi + d.\sin \theta = e$$

Avec d, la distance AB, $\varphi$, l'angle de tangage, $\theta$ l'angle de roulis. Les angles $\varphi$ et $\theta$ sont mesurés par l'inclinomètre 3 axes attaché au télémètre selon l'invention. La condition mathématique démontre clairement que e = 0, dans plusieurs situations :

1) (R1-R2) sin $\varphi$ = - d.sin $\theta$. Ce qui implique que dans le cas d'un positionnement du dispositif en plongé ou contre plongé ($\varphi$<>0) et de surcroit décalé latéralement, (R1<>R2), il faut réaliser un angle de roulis au dispositif tel que les deux membres de la relation soient égaux et opposés. Il faut donc tourner le dispositif jusqu'à ce que l'affichage de e soit zéro

2) Si φ=θ=0, le pointage est horizontal quelle que soit la valeur de R1 et R2, cela revient à positionner l'appareil bien à plat sur le plan horizontal contenant AB

3) Si R1=R2 (au droit de AB), le pointage est horizontal si θ = 0 et quel que soit l'angle de tangage φ

Cette procédure de calcul au moyen des inclinomètres trois axes pour résoudre les problèmes de positionnement prend très nettement avantage sur les dispositifs de l'art antérieur, qui doivent contrôler leur assiette à l'aide de dispositifs faisant office de niveau à bulle pour réduire les erreurs de mesure. Grâce au module inclinomètre trois axes, on peut toujours vérifier les niveaux et défauts d'alignement dans n'importe quelle position et orientation du dispositif selon l'invention par des relations trigonométriques bien connues de l'homme de l'art.

Le télémètre selon l'invention comprend donc des moyens permettant, à partir d'un référentiel O attaché au télémètre, de générer ou de déterminer au moins deux lignes de visée vers deux points cibles A et B quelconques de l'espace, de mesurer les distances OA et OB, de mesurer l'angle AÔB, de calculer la distance spatiale entre les points A et B, de déterminer les angles de tangage et de roulis du télémètre, et d'en déduire le défaut d'alignement du segment AB sur l'horizontale ou sur la verticale gravitaire.

Selon un autre mode d'exécution du télémètre selon l'invention, il comprend :

- un moyen permettant de déterminer, à partir d'un référentiel quelconque O de l'espace, deux lignes de visée vers deux points cibles A et B quelconques de l'espace dont on veut mesurer l'écartement de sorte que les trois points A, O, B déterminent un triangle quelconque contenu dans un plan de l'espace, d'orientation quelconque,

- un moyen permettant de mesurer, d'une part, l'angle d'ouverture (α) entre les deux lignes de visée OA et OB et on mesure, d'autre part, la longueur d'au moins une des deux lignes de visée OA ou OB,

- un moyen permettant de calculer et de déterminer la distance spatiale entre les points A et B, de préférence constitué par un calculateur, en appliquant par exemple la loi de composition vectorielle, la règle des sinus ou la loi des cosinus,

- un moyen permettant de déterminer les angles de tangage et de roulis, et

- un moyen permettant de calculer, à partir de ces valeurs, le défaut d'alignement du segment AB sur l'horizontale ou sur la verticale gravitaire.

Selon un exemple de réalisation du télémètre selon l'invention nullement limitatif, le moyen permettant de déterminer les angles de tangage et de roulis est constitué par un inclinomètre ou accéléromètre, préférentiellement trois axes, intégré dans une des parties ou branches 4A, 4B.

La figure 9a illustre le procédé selon l'invention de mesure de distance entre deux points A et B pointés respectivement par les faisceaux R1 et R2 dont les longueurs sont déterminées par un processus de triangulation faisant appel à deux autres faisceaux auxiliaires R3 et R4 préférentiellement laser.

Des extrémités D et C du compas 4, sortent d'une part les faisceaux de pointage R1 et R2 prenant origine virtuelle en O et les faisceaux auxiliaires R3 et R4 orientables et tournant respectivement autour de C et de D dans le plan contenant R1 et R2.

Nous appellerons θ, l'angle ACB entre les rayons R2 et R3 et, δ, l'angle ADB entre les rayons R1 et R4. Lorsque les extrémités des faisceaux R1, R3 d'une part et R2, R4 d'autre part pointent respectivement sur les cibles A et B, on peut déterminer la longueur de R1 et de R2, connaissant OC et OD par construction du compas, et les angles α, δ et θ donnés par les codeurs angulaires 7, 7a et 7b du dispositif 4.

En considérant les triangles OAC et OBD, et en appliquant la règle des sinus sur les triangles quelconques, on déduit les longueurs OA et OB, donc R1 et R2 :

$$R_1 = \frac{OC \sin\theta}{\sin(\theta - \alpha)} \qquad R_2 = \frac{OD \sin\delta}{\sin(\delta - \alpha)}$$

Selon un des modes d'exécution du procédé avec fonction distance par triangulation, tel qu'il est décrit ci-dessus et représenté à la figure 9b, le boîtier comprend deux parties ou branches 4A, 4B. Ledit boîtier ayant ainsi la forme d'un compas 4. Les deux branches préférentiellement de même longueur 4A, 4B sont articulées autour d'un codeur angulaire 7 de type potentiomètre par exemple, qui joue avantageusement aussi le rôle d'axe de rotation. Une des branches 4A, 4B, est dotée d'un microcontrôleur avec afficheur 5. Chaque branche du dispositif selon l'invention est dotée de moyens permettant d'émettre à son extrémité libre, un faisceau de pointage lumineux R1, R2 à direction colinéaire avec la longueur de ladite branche, et un faisceau lumineux R3, R4, auxiliaire de triangulation à direction tournante autour de ladite extrémité libre. Les rotations des faisceaux auxiliaires R3, R4 sont exécutées préférentiellement par les boutons rotatifs 9a, 9b qui codent en même temps l'angle de rotation. Dans une procédure de mesure de distance entre deux points de l'espace A et B, selon la variante de réalisation 4 :

- on oriente le compas en le tenant des deux mains, dans la direction de l'objet à mesurer ;

- on écarte les branches du compas de sorte à pointer simultanément les des faisceaux R1, R2 sur les points de l'espace A et B ;

- on dirige chacun des faisceaux auxiliaires d'une branche vers la branche controlatérale en faisant tourner avec les pouces ou entre le pouce et l'index, les boutons 9a, 9b, de sorte à pointer sur les cibles A, B.

Etant donné que la mesure est purement statique en ce qu'elle ne relève que d'une conformation strictement angulaire du dispositif, elle peut s'effectuer en temps réel et en continu, ladite mesure reste disponible sur l'afficheur 5 sans avoir à la mémoriser, même après avoir déplacé le dispositif pour autant que l'on ne change pas les angles de pointage et de triangulation.

Un des gros avantages d'un tel procédé et dispositif, réside dans le fait qu'il n'est pas nécessaire de pointer les faisceaux R1, R2, R3, R4 sur un objet matériel réfléchissant puisque que dans ce type de mesure, l'écho servant à la mesure de distance n'est pas pris en compte. La seule intersection de R1 avec R3 ou R2 avec R4, suffit pour détermine une distance. On peut donc mesurer un point immatériel virtuel quelconque de l'espace. Cette caractéristique peut ouvrir sur de nouveaux champs d'applications du dispositif 4.

Il est à noter que dans une variante simplifiée mais non illustrée du dispositif 4, les faisceaux de pointage R1, R2 font office aussi de faisceaux de triangulation. Des extrémités de chaque branche ne sort qu'un faisceau que l'on peut à la demande orienter autour de l'axe d'un codeur angulaire, placé à l'extrémité libre du compas. Dans un premier temps, on règle à l'aide des boutons 9a, 9b l'alignement des faisceaux sur les branches et on effectue un pointage sur A, B, puis sans changer de position, ni l'ouverture du compas, on croise les faisceaux R1, R2 à l'aide des boutons 9a, 9b afin de pointer R1 sur B et R2 sur A.

Dans un mode d'exécution du télémètre particulièrement bon marché, on pourra s'affranchir des codeurs angulaires 7a et 7b servants à déterminer par triangulation les longueurs R1 et R2. La figure 10 illustre dans son principe cet agencement selon le procédé suivant :

Les lasers de triangulation sont à direction fixe et connue par rapport à leur support 4A et 4B. On ne pourra par conséquent réaliser les intersections au point A et au point B de la figure 10 qu'en manoeuvrant l'ouverture du compas.

L'angle de direction le plus avantageux est de 90° car il permet de construire un triangle rectangle. Si on considère alors (voir figure 10) le triangle OAC, rectangle en C et le triangle ODB rectangle en D, il est aisé, connaissant l'angle $\alpha 2$ en O, de déterminer la longueur de la branche virtuelle R1 par la relation : R1 = OC / cos($\alpha 2$).

On procède de même pour le calcul de R2.

Dans une procédure de détermination d'une distance AB selon cette variante :

- on met en oeuvre le pointage (faisceaux colinéaires avec les branches du compas), on ajuste l'ouverture du compas $\alpha 1$ sur A et B, puis on valide et mémorise $\alpha 1$ ;

- on met en oeuvre le Laser de triangulation, on ajuste l'ouverture du compas $\alpha 2$ en agissant sur la branche OC par rotation autour de O afin de réaliser l'intersection au point A des faisceaux de pointage et de triangulation. ($\alpha 2$ est mémorisé) ;

- on opère de la même façon pour la mesure de R2 en réalisant un angle $\alpha 3$ qui ne figure pas sur la figure 10 pour des raisons de clarté ;

- on calcule à partir des paramètres dimensions du compas et les 3 angles mémorisés, la longueur du segment AB par un simple calcul trigonométrique.

Il est bon de souligner que l'usage du dispositif selon cet agencement pour une télémesure classique de distance entre le dispositif O et une cible réelle ou virtuelle dans l'espace, est particulièrement intéressant, puisque la procédure de mesure est réduite en une seule manoeuvre d'ouverture. La construction de ce dispositif est très simple et très bon marché comparée aux télémètres du commerce.

Selon un autre mode de réalisation particulièrement avantageuse du télémètre, bi-faisceaux à triangulation, illustré à la figure 11, les distances R1 et R2 sont calculées à partir de la lumière réfléchie sur la cible A ou B et qui vient frapper des photo-détecteurs 10a ou 10b placés sur les faces internes des branches 4A et 4B du dispositif. Les faisceaux réfléchis R3 ou R4 focalisés par l'objectif L (voir figure 12) se projettent sur un PSD (Position Sensitive Detector) ou un réseau linéaire de diode ou préférentiellement un CCD (Charged Coupled Device). Ces dispositifs codent l'angle d'incidence θ (pour la mesure sur R3) du rayon lumineux qui frappe leur surface photosensible selon la position x du point d'impact. Connaissant la distance b du CCD par rapport à O, les angles α et θ, on déduit la distance R1 :

$$R_1 = \frac{b \sin \theta}{\sin(\theta + \alpha)}$$

La mesure de R2 relève du même processus.

Selon cet agencement, pour mesurer la longueur AB il suffit de régler l'angle d'ouverture α et de valider la mesure, le microcontrôleur embarqué calcule et affiche la distance AB.

Dans une réalisation particulièrement bon marché du dispositif selon l'invention, on pourra réaliser une télémesure d'objets de petite et moyenne dimension très simplement en maintenant parallèles les faisceaux Laser issus des extrémités des branches du compas.

La figure 13a illustre le principe géométrique de la télémesure. Les deux branches 4A, 4B du compas 4 selon l'invention, sont articulées autour de l'axe de rotation d'un capteur angulaire 7 bien connu de l'homme de l'art, de type potentiomètre par exemple. Le corps dudit capteur est fixé à l'extrémité d'une des branches du compas tandis que l'extrémité de l'autre branche est solidaire de l'axe de rotation du capteur. A tout moment, il est possible de connaître la valeur de l'angle d'ouverture des deux branches. Ladite valeur pourra préférentiellement être exprimée en signal électrique analogique ou numérique.

Dans cette réalisation selon l'invention, le procédé se comporte comme si on déterminait à partir d'un référentiel quelconque O de l'espace deux lignes de visée vers les projections virtuelles A', B', deux points cibles réels A et B quelconques de l'espace, dont on veut mesurer l'écartement de sorte que les trois points A',O,B' déterminent un triangle quelconque contenu dans un plan de l'espace, d'orientation quelconque.

Effectivement, des rayons Laser 11a et 11b sont émis des extrémités des branches 4A et 4B, à une distance r connue à partir du référentiel O. Ces rayons 11a, 11b sont parallèles entre eux et perpendiculaires au plan contenant les deux branches 4A et 4B de sorte que la distance d entre ces deux rayons laser se conserve le long des faisceaux jusqu'à leur impact sur les points cible réels. La figure 13b donne un exemple de réalisation pratique du dispositif selon cette variante. L'opérateur qui veut mesurer la distance d, par exemple entre deux poteaux, se place en face, et tient la branche 4A dans la main gauche et 4B dans la main droite. Il ouvre manuellement lesdites branches de façon à ajuster les faisceaux lasers (impacts) sur les cibles (par exemple les axes des deux poteaux). Il active alors un bouton poussoir 4 pour figer la mesure qui reste disponible sur l'afficheur 5. Dans cette réalisation, il suffit de connaître un seul paramètre, à savoir l'angle d'ouverture α, puisque la longueur r est constante et connue.

**Revendications**

1. Procédé de mesure télémétrique, permettant à partir d'un référentiel O attaché à un dispositif (4), de générer ou de déterminer au moins deux lignes de visée vers deux points cibles A et B quelconques de l'espace, de mesurer les distances OA et OB, de mesurer l'angle AÔB, de calculer la distance spatiale entre les points A et B, caractérisé en qu'il détermine les angles de tangage et de roulis du dispositif (4), et permet d'en déduire le défaut d'alignement du segment AB sur l'horizontale ou sur la verticale gravitaire.

2. Procédé de mesure télémétrique selon la revendication 1, **caractérisé en ce qu'**on pointe les cibles A et B par deux faisceaux lumineux préférentiellement laser (R1 et R2), on détermine ensuite la distance spatiale entre les points A et B, on mesure, par exemple à l'aide d'un inclinomètre ou d'un accéléromètre, d'au moins un axe et de préférence trois axes, l'angle φ de tangage et l'angle θ de roulis, et on calcule, de préférence au moyen d'un calculateur, l'erreur d'horizontalité (ou défaut d'alignement sur l'horizontale) e par la formule :

$$e = (|OA| - |OB|). \, Sin \; \varphi + |AB|. \, Sin \, \theta$$

**3.** Procédé de mesure télémétrique selon l'une des revendications 1 ou 2, **caractérisé en ce que**, pour déterminer la distance spatiale entre les points A et B, on détermine à partir d'un référentiel quelconque O de l'espace deux lignes de visée vers deux points cibles réels A et B quelconques de l'espace, ou vers leur projection virtuelle, dont on veut mesurer l'écartement de sorte que les trois points A,O,B déterminent un triangle quelconque contenu dans un plan de l'espace, d'orientation quelconque, on mesure, d'une part, l'angle d'ouverture ($\alpha$) entre les deux lignes de visée OA et OB et on mesure, d'autre part, la longueur d'au moins une des deux lignes de visée OA ou OB, on calcule et on détermine ensuite la distance spatiale entre les points A et B, en appliquant par exemple la loi de composition vectorielle ou la loi des cosinus, de préférence au moyen d'un calculateur.

**4.** Procédé de mesure télémétrique selon l'une des revendications précédentes **caractérisé en ce qu'**il permet, à partir d'un référentiel O attaché à un dispositif, de générer ou de déterminer au moins deux lignes de visée OA et OB vers deux points cibles A et B quelconques de l'espace, de définir deux segments OD et OC des lignes respectivement OA et OB, de générer ou de déterminer à partir des extrémités D et C desdits segments, au moins deux autres lignes de visée DB et CA, on mesure l'angle d'ouverture ($\alpha$) entre les deux lignes de visée OA et OB, on mesure les angles d'ouverture ($\delta$) entre les deux lignes de visée DA et DB, et ($\theta$) entre les deux lignes de visée CA et CB, on calcule et on détermine ensuite les longueurs OA et OB par triangulation puis la distance entre les points A et B, appliquant par exemple la règle des sinus ou la loi des cosinus, de préférence au moyen d'un calculateur.

**5.** Procédé de mesure télémétrique selon la revendication 4, **caractérisé en ce que** les segments OD et OC sont matérialisées par les branches d'un compas (4) articulé en O, la distance spatiale entre les points A et B est obtenue par triangulation, après avoir pointé les cibles A et B par deux faisceaux lumineux préférentiellement laser (R1 et R2) issus par au moins une source de lumière d'origine O capable d'effectuer un balayage lumineux de la droite AB, on mesure l'angle d'ouverture ($\alpha$) entre les deux lignes de visée OA et OB, puis on dirige de façon croisée à partir de chacune des extrémités C et D du compas (4) respectivement un faisceau auxiliaire (R3) vers la cible A et un faisceau auxiliaire (R4) vers la cible B, après avoir déterminé les angles ($\delta$) et ($\theta$), par exemple respectivement au moyen de codeurs (7a, 7b), on calcule et on détermine ensuite la distance spatiale entre les points A et B, appliquant par exemple la règle des sinus ou la loi des cosinus, de préférence au moyen d'un calculateur.

**6.** Procédé de mesure télémétrique selon la revendication 5, **caractérisé en ce que** la distance spatiale entre les points A et B est obtenue par triangulation :

- après avoir pointé les cibles A et B par les faisceaux principaux (R1 et R2) on valide et on mémorise l'angle d'ouverture ($\alpha$1) compris entre les lignes de visée OA et OB,
- on ajuste l'ouverture ($\alpha$2) du compas (4) en agissant sur la branche (4B) par rotation autour du référentiel O de sorte à diriger à partir de l'extrémité C du compas (4) vers la cible A, un faisceau auxiliaire (R3) formant un angle de 90° avec la branche (4B), on valide et on mémorise l'angle ($\alpha$2) d'ouverture entre les deux lignes de visée OA et OC;
- on pointe de nouveau la cible B avec le faisceau R2 colinéaire à la branche OC ;
- on ajuste l'ouverture du compas (4) en agissant sur l'autre branche (4A) par rotation autour du référentiel O de sorte à diriger à partir de l'extrémité D du compas (4) vers la cible B, un faisceau auxiliaire (R4) formant un angle de 90° avec la branche (4A), on valide et on mémorise l'angle d'ouverture entre les deux lignes de visée OB et OD;
- on calcule à partir des paramètres de dimensions du compas et des trois angles mémorisés, la longueur du segment AB en appliquant un simple calcul trigonométrique.

**7.** Procédé de mesure télémétrique selon la revendication 5, **caractérisé en ce que** la distance spatiale entre les points A et B est obtenue par triangulation :

- après avoir pointé les cibles A et B par les faisceaux principaux (R1 et R2), on valide la mesure de l'angle d'ouverture ($\alpha$) entre les lignes de visée OAet OB ;
- on calcule les distances OA et OB à partir des rayons réfléchis (R3, R4) respectivement des faisceaux R1 et R2 sur la cible A ou B et qui vient frapper des photo-détecteurs (10a, 10b) placés respectivement sur les faces internes des branches (4A, 4B) du compas (4),
- on focalise les faisceaux réfléchis R3 ou R4 à l'aide d'un objectif (L) sur un détecteur disposé sur chacune des branches (4A, 4B) à une distance (b) connue du référentiel O ;

- on code l'angle d'incidence ($\theta$ pour la mesure sur R3) du rayon lumineux R3 qui frappe la surface photosensible du photo-détecteur (10b) selon la position du point d'impact (x) et on déduit la distance OA = R1 :

$$R_1 = \frac{b \sin \theta}{\sin(\theta + \alpha)}$$

- de même, on code l'angle d'incidence du rayon lumineux R4 qui frappe la surface photosensible du photo-détecteur (10a) selon la position (x) du point d'impact et on déduit la distance OB = R2 ;
- connaissant $\alpha$, OA et OB, on calcule et on détermine ensuite la distance spatiale entre les points A et B, de préférence au moyen d'un calculateur.

**8.** Procédé de mesure télémétrique selon la revendication 5, **caractérisé en ce que** la distance spatiale entre les points A et B est obtenue par triangulation, après avoir pointé les cibles A et B par deux faisceaux lumineux préférentiellement laser (11a et 11b) issus des extrémités des branches (4A, 4B), à une distance (r) connue à partir du référentiel O, ces faisceaux lumineux étant parallèles entre eux et perpendiculaires au plan contenant les deux branches (4A, 4B) de sorte que la distance entre les deux faisceaux lumineux se conserve le long de la trajectoire desdits faisceaux jusqu'à leur impact sur les cibles A et B, on mesure et on valide l'angle d'ouverture ($\alpha$) entre les deux branches (4A, 4B), connaissant la longueur on calcule et on détermine ensuite la distance spatiale entre les points A et B, appliquant par exemple la règle des sinus ou la loi des cosinus, de préférence au moyen d'un calculateur.

**9.** Télémètre pour la mesure de distances, de longueurs, de surfaces et de niveaux, il comprend des moyens permettant, à partir d'un référentiel O attaché au télémètre, de générer ou de déterminer au moins deux lignes de visée vers deux points cibles A et B quelconques de l'espace, de mesurer les distances OA et OB, de mesurer l'angle AÔB, de calculer la distance spatiale entre les points A et B, **caractérisé en ce qu'**il dispose de moyens pour déterminer les angles de tangage et de roulis du télémètre, pour en déduire le défaut d'alignement du segment AB sur l'horizontale ou sur la verticale gravitaire.

**10.** Télémètre selon la revendication 9, **caractérisé en ce qu'**il comprend :

- un moyen permettant de déterminer, à partir d'un référentiel quelconque O de l'espace, deux lignes de visée vers deux points cibles A et B quelconques de l'espace dont on veut mesurer l'écartement de sorte que les trois points A, O, B déterminent un triangle quelconque contenu dans un plan de l'espace, d'orientation quelconque,
- un moyen permettant de mesurer, d'une part, l'angle d'ouverture ($\alpha$) entre les deux lignes de visée OA et OB et on mesure, d'autre part, la longueur d'au moins une des deux lignes de visée OA ou OB,
- un moyen permettant de calculer et de déterminer la distance spatiale entre les points A et B, de préférence constitué par un calculateur, en appliquant par exemple la loi de composition vectorielle, la règle des sinus ou la loi des cosinus,
- un moyen permettant de déterminer les angles de tangage et de roulis, et
- un moyen permettant de calculer, à partir de ces valeurs, le défaut d'alignement du segment AB sur l'horizontale ou sur la verticale gravitaire.

**11.** Télémètre selon l'une des revendication 9 ou 10, **caractérisé en ce qu'**il est constitué par un boîtier comprenant deux branches (4A, 4B), ledit boitier ayant ainsi une forme de compas (4), ces branches étant articulées autour d'un axe de rotation, et comportant, un dispositif générateur de faisceaux lumineux, capable de réaliser deux faisceaux de pointage divergents (R1, R2) à direction colinéaire avec la longueur desdites branches, à partir d'un point référentiel d'origine O, et agencé pour permettre de régler l'angle de divergence ($\alpha$) compris entre 0° et 180° de ces faisceaux divergents, de sorte que ces derniers peuvent être pointés sur des points cibles réels A et B distants l'un de l'autre, ou vers leur projection virtuelle.

**12.** Télémètre selon l'une des revendications 9 à 11, **caractérisé en ce que** le moyen permettant de déterminer les angles de tangage et de roulis est constitué par un inclinomètre ou accéléromètre, préférentiellement trois axes, intégré dans une des branches (4A, 4B).

**13.** Télémètre selon l'une des revendications 9 à 12, **caractérisé en ce que** chaque branche (4A, 4B) est dotée de moyens permettant d'émettre à son extrémité libre, un faisceau lumineux (R3, R4), auxiliaire de triangulation à direction tournante autour de ladite extrémité libre et **en ce qu'**il comprend des boutons rotatifs (9a, 9b) munis de codeurs (7a, 7b) qui réalisent les rotations desdits faisceaux auxiliaires (R3, R4) et codent l'angle de rotation.

**14.** Télémètre selon la revendication 13, **caractérisé en ce qu'**il comprend des photo-détecteurs (10a, 10b) de réception des rayons réfléchis R3, R4 par exemple constitués par des PSD (Position Sensitive Detector) ou un réseau linéaire de diode ou préférentiellement un CCD (Charged Coupled Device).

**15.** Télémètre selon l'une des revendications 11 à 14, **caractérisé en ce que** les deux branches (4A, 4B) du boîtier sont articulées autour d'un codeur angulaire (7) de type potentiomètre, le corps dudit codeur angulaire (7) étant fixé à l'extrémité de l'une des branches du compas (4), tandis que l'extrémité de l'autre branche est solidaire de l'axe de rotation du codeur angulaire (7), permettant ainsi de connaître, à tout moment, la valeur de l'angle d'ouverture desdites branches (4A, 4B).

**Patentansprüche**

**1.** Telemetrisches Messverfahren, das es ermöglicht, ausgehend von einem Bezugsorgan O, das an einer Vorrichtung (4) befestigt ist, mindestens zwei Zielerfassungslinien zu erzeugen oder zu bestimmen, welche auf zwei beliebige Zielpunkte A und B im Raum ausgerichtet sind, die Abstände OA und OB zu messen, den Winkel AÖB zu messen, den räumlichen Abstand zwischen den Punkten A und B zu berechnen, **dadurch gekennzeichnet, dass** es die Nick- und Rollwinkel der Vorrichtung (4) bestimmt und es ermöglicht, daraus die Ausrichtungsabweichung des Abschnitts AB gegenüber der Horizontalen oder der Lotrichtung abzuleiten.

**2.** Telemetrisches Messverfahren nach Anspruch 1, **dadurch gekennzeichnet, dass** die Ziel A und B mit zwei Licht-, vorzugsweise Laserstrahlen (R1 und R2) angesteuert werden, um anschließend den räumlichen Abstand zwischen den Punkten A und B zu bestimmen, bei mindestens einer Achse und vorzugsweise bei drei Achsen, beispielsweise mit Hilfe eines Neigungsmessgeräts oder eines Beschleunigungsmessgeräts, den Nickwinkel $\varphi$ und den Rollwinkel $\theta$ zu messen und, vorzugsweise mittels eines Rechners, die Horizontalitätsabweichung (oder die Ausrichtungsabweichung gegenüber der Horizontalen) e anhand der folgenden Formel zu berechnen:

$$e = (|OA|-|OB|). \text{Sin } \varphi + |AB|. \text{Sin } \theta$$

**3.** Telemetrisches Messverfahren nach einem der Ansprüche 1 oder 2, **dadurch gekennzeichnet, dass** zur Bestimmung des räumlichen Abstands zwischen den Punkten A und B, ausgehend von einem beliebigen Bezugsorgan O im Raum, zwei Zielerfassungslinien bestimmt werden, welche auf zwei beliebige tatsächliche Zielpunkte A und B im Raum oder auf deren virtuelle Projektion ausgerichtet sind, wobei deren Beabstandung derart gemessen werden soll, dass die drei Punkte A, O, B ein beliebiges Dreieck abgrenzen, welches sich in einer Ebene des Raumes von beliebiger Ausrichtung befindet, dass einerseits der Öffnungswinkel ($\alpha$) zwischen den beiden Zielerfassungslinien OA und OB gemessen wird und andererseits die Länge mindestens einer der beiden Zielerfassungslinien OA oder OB gemessen wird, woraufhin der räumliche Abstand zwischen den Punkten A und B bestimmt wird, indem zum Beispiel, vorzugsweise mittels eines Rechners, der Satz zur Vektorzusammensetzung oder der Kosinussatz zur Anwendung gebracht wird.

**4.** Telemetrisches Messverfahren nach einem der vorhergehenden Ansprüche, **dadurch gekennzeichnet, dass** es ermöglicht, ausgehend von einem Bezugsorgan O, das an einer Vorrichtung befestigt ist, mindestens zwei Zielerfassungslinien OA und OB zu erzeugen oder zu bestimmen, welche auf zwei beliebige Zielpunkte A und B im Raum ausgerichtet sind, zwei Abschnitte OD und OC der Linien OA beziehungsweise OB festzulegen, ausgehend von den Enden D und C dieser Abschnitte mindestens zwei weitere Zielerfassungslinien DB und CA zu erzeugen oder zu bestimmen, den Öffnungswinkel ($\alpha$) zwischen den beiden Zielerfassungslinien OA und OB zu messen, die Öffnungswinkel ($\delta$) zwischen den beiden Zielerfassungslinien DA und DB und ($\theta$) zwischen den beiden Zielerfassungslinien CA und CB zu messen, um anschließend die Längen OA und OB durch Triangulation und dann den Abstand zwischen den Punkten A und B zu berechnen, indem zum Beispiel, vorzugsweise mittels eines Rechners, der Sinussatz oder der Kosinussatz zur Anwendung gebracht wird.

**5.** Telemetrisches Messverfahren nach Anspruch 4, **dadurch gekennzeichnet, dass** die Abschnitte OD und OC durch die Schenkel eines Zirkels (4) materialisiert sind, dessen Gelenk sich bei O befindet, dass der räumliche Abstand zwischen den Punkten A und B durch Triangulation erhalten wird, nachdem die Ziele A und B durch zwei Licht- vorzugsweise Laserstrahlen (R1 und R2) angesteuert wurden, welche aus mindestens einer Ursprungslichtquelle O hervorgehen, wobei diese dazu befähigt sind, die Gerade AB mit Licht zu überstreichen, dass der Öffnungswinkel ($\alpha$) zwischen den beiden Zielerfassungslinien OA und OB gemessen wird, um anschließend ausgehend von den jeweiligen Enden C und D des Zirkels (4), in sich überkreuzender Weise, einen Hilfsstrahl (R3) auf das Ziel A beziehungsweise einen Hilfsstrahl (R4) auf das Ziel B zu richten, und dass, nachdem die Winkel ($\delta$) und ($\theta$) beispielsweise mittels Drehgebern (7a, 7b) bestimmt wurden, der räumliche Abstand zwischen den Punkten A und B berechnet und bestimmt wird, indem zum Beispiel, vorzugsweise mittels eines Rechners, der Sinussatz oder der Kosinussatz zur Anwendung gebracht wird.

6. Telemetrisches Messverfahren nach Anspruch 5, **dadurch gekennzeichnet, dass** der räumliche Abstand zwischen den Punkten A und B durch Triangulation erhalten wird:

- nachdem die Ziele A und B durch die Hauptstrahlen (R1 und R2) angesteuert wurden, wird der Öffnungswinkel ($\alpha$1), welchen die Zielerfassungslinien OA und OB einschließen, bestätigt und gespeichert,
- es wird die Öffnungsstellung ($\alpha$2) des Zirkels (4) angepasst, indem durch eine Drehbewegung um das Bezugsorgan O derart auf den Schenkel (4B) eingewirkt wird, dass ein Hilfsstrahl (R3), welcher mit dem Schenkel (4B) einen Winkel von 90° einschließt, ausgehend vom Ende C des Zirkels (4) auf das Ziel A gerichtet wird, woraufhin der Öffnungswinkel ($\alpha$2) zwischen den beiden Zielerfassungslinien OA und OC bestätigt und gespeichert wird;
- das Ziel B wird erneut mit dem kollinearen Strahl R2 des Schenkels OC angesteuert;
- es wird die Öffnungsstellung des Zirkels (4) angepasst, indem durch eine Drehbewegung um das Bezugsorgan O derart auf den Schenkel (4A) eingewirkt wird, dass ein Hilfsstrahl (R4), welcher mit dem Schenkel (4A) einen Winkel von 90° einschließt, ausgehend von dem Ende D des Zirkels (4) auf das Ziel B gerichtet wird, woraufhin der Öffnungswinkel zwischen den beiden Zielerfassungslinien OB und OD bestätigt und gespeichert wird;
- ausgehend von den Abmessungskennwerten des Zirkels und den drei gespeicherten Winkeln wird die Länge des Abschnitts AB berechnet, indem eine einfache trigonometrische Berechnung zur Anwendung gebracht wird.

7. Telemetrisches Messverfahren nach Anspruch 5, **dadurch gekennzeichnet, dass** der räumliche Abstand zwischen den Punkten A und B durch Triangulation erhalten wird:

- nachdem die Ziele A und B durch die Hauptstrahlen (R1 und R2) angesteuert wurden, wird die Messung des Öffnungswinkel ($\alpha$) zwischen den Zielerfassungslinien OA und OB bestätigt;
- ausgehend von den Strahlen (R3, R4), die reflektiert werden, wenn die Strahlen R1 und R2 auf das Ziel A beziehungsweise B treffen, und die auf Photodetektoren (10a, 10b) treffen, welche auf den Innenseiten der Schenkel (4A, 4B) des Zirkels 4 angeordnet sind, werden die Abstände OA und OB berechnet,
- die reflektierten Strahlen R3 oder R4 werden, mit Hilfe eines Objektivs (L) auf einem Detektor gebündelt, der auf jedem der Schenkel (4A, 4B) in einem bekannten Abstand (b) vom Bezugsorgan O angeordnet ist;
- der Einfallswinkel ($\theta$ für die Messung bezüglich R3) des Lichtstrahls R3, welcher auf die lichtempfindliche Oberfläche des Photodetektors (10b) trifft, wird gemäß der Position des Auftreffpunkts (x) codiert, woraufhin der Abstand OA = R1 abgeleitet wird: $R_1 = \dfrac{b\sin\theta}{\sin(\theta+\alpha)}$

- gleichermaßen wird der Einfallswinkel des Lichtstrahls R4, welcher auf die lichtempfindliche Oberfläche des Photodetektors (10a) trifft, gemäß der Position des Auftreffpunkts (x) codiert, woraufhin der Abstand OB = R2 abgeleitet wird;
- nachdem $\alpha$, OA und OB nunmehr bekannt sind, wird der räumliche Abstand zwischen den Punkten A und B, vorzugsweise mittels einen Rechners, berechnet und bestimmt.

8. Telemetrisches Messverfahren nach Anspruch 5, **dadurch gekennzeichnet, dass** der räumliche Abstand zwischen den Punkten A und B durch Triangulation erhalten wird, wobei zunächst die Ziele A und B durch zwei Licht-, vorzugsweise Laserstrahlen (11a und 11b) angesteuert wurden, die in einem bekannten Abstand (r) vom Bezugsorgan O aus den Enden der Schenkel (4A, 4B) hervorgehen, wobei diese Lichtstrahlen parallel zueinander und rechtwinklig zu der Ebene sind, in welcher sich die Schenkel (4A, 4B) befinden, sodass der Abstand zwischen den beiden Lichtstrahlen über die gesamte Durchlaufstrecke der Strahlen erhalten bleibt, bis sie auf die Ziele A und B auftreffen, um dann den Öffnungswinkel ($\alpha$) zwischen den beiden Schenkeln (4A, 4B) zu messen und zu bestätigen, woraufhin auf Grundlage der nunmehr bekannten Länge der räumliche Abstand zwischen den Punkten A und B berechnet und bestimmt wird, indem zum Beispiel, vorzugsweise mittels eines Rechners, der Sinussatz oder der Kosinussatz zur Anwendung gebracht wird.

9. Telemeter zur Messung von Abständen, Längen, Oberfächen und Pegeln, wobei es Mittel umfasst, die es ermöglichen, ausgehend von einem Bezugsorgan O, das am Telemeter befestigt ist, mindestens zwei Zielerfassungslinien zu erzeugen oder zu bestimmen, welche auf zwei beliebige Zielpunkte A und B im Raum ausgerichtet sind, die Abstände OA und OB zu messen, den Winkel AÖB zu messen, den räumlichen Abstand zwischen den Punkten A und B zu berechnen, **dadurch gekennzeichnet, dass** es über Mittel zur Bestimmung der Nick-und Rollwinkel verfügt, um daraus die Ausrichtungsabweichung des Abschnitts AB gegenüber der Horizontalen oder der Lotrichtung abzuleiten.

10. Telemeter nach Anspruch 9, **dadurch gekennzeichnet, dass** es Folgendes umfasst:

- ein Mittel, das es ermöglicht, ausgehend von einem beliebigen Bezugsorgan O im Raum, zwei Zielerfassungslinien zu bestimmen, welche auf zwei beliebige Zielpunkte A und B im Raum ausgerichtet sind, wobei deren Beabstandung derart gemessen werden soll, dass die drei Punkte A, O, B ein beliebiges Dreieck abgrenzen, welches sich in einer Ebene des Raumes von beliebiger Ausrichtung befindet,
- ein Mittel, welches es ermöglicht, einerseits den Öffnungswinkel ($\alpha$) zwischen den beiden Zielerfassungslinien OA und OB zu messen, wobei andererseits die Länge mindestens einer der beiden Zielerfassungslinien OA und OB gemessen wird,
- ein Mittel, das vorzugsweise aus einem Rechner besteht und das es ermöglicht, den räumlichen Abstand zwischen den Punkten A und B zu berechnen und zu bestimmen, indem zum Beispiel der Satz der Vektorzusammensetzung, der Sinussatz oder der Kosinussatz zur Anwendung gebracht wird,
- ein Mittel, das es ermöglicht, die Nick- und Rollwinkel zu bestimmen, und
- ein Mittel, das es ermöglicht, ausgehend von diesen Werten die Ausrichtungsabweichung des Abschnitts AB gegenüber der Horizontalen oder der Lotrichtung zu berechnen.

11. Telemeter nach einem der Ansprüche 9 oder 10, **dadurch gekennzeichnet, dass** es aus einem Gehäuse besteht, welches zwei Schenkel (4A, 4B) umfasst, wobei das Gehäuse somit eine Zirkelform (4) aufweist, wobei diese Schenkel an einer Drehachse angelenkt sind und eine Vorrichtung zur Erzeugung von Lichtstrahlen aufweist, welche dazu befähigt ist, ausgehend von einem Ursprungsbezugspunkt O zwei divergierende Ansteuerungsstrahlen (R1, R2) bereitzustellen, deren Richtung kollinear mit der Längenerstreckung der Schenkel ist, und welche derart ausgestaltet ist, dass sie es ermöglicht, den Divergenzwinkel ($\alpha$) dieser divergierenden Strahlen innerhalb eines Bereiches von 0° bis 180° einzustellen, sodass diese auf die tatsächlichen Zielpunkte A und B, welche voneinander beabstandet sind, oder auf deren virtuelle Projektion gerichtet werden können.

12. Telemeter nach einem der Ansprüche 9 bis 11, **dadurch gekennzeichnet, dass** das Mittel, welches es ermöglicht, die Nick- und Rollwinkel zu bestimmen, aus einem Neigungsmessgerät oder Beschleunigungsmessgerät besteht, vorzugsweise für drei Achsen, wobei es in einen der Schenkel (4A, 4B) eingebaut ist.

13. Telemeter nach einem der Ansprüche 9 bis 12, **dadurch gekennzeichnet, dass** jeder der Schenkel (4A, 4B) mit Mitteln ausgestattet ist, die es ermöglichen, an seinem freien Ende einen Lichtstrahl (R3, R4) aussenden, der die Triangulation unterstützt und dessen Richtung sich um das freie Ende dreht, und dadurch, dass es Drehknöpfe (9a, 9b) umfasst, die mit Drehgebern (7a, 7b) versehen sind, welche die Drehbewegungen der Hilfsstrahlen (R3, R4) durchführen und den Drehwinkel codieren.

14. Telemeter nach Anspruch 13, **dadurch gekennzeichnet, dass** es Photodetektoren (10a, 10b) zum Empfang der reflektierten Strahlen R3, R4 umfasst, wobei diese beispielsweise aus PSD (Position Sensitive Detector) oder einem linearen Diodenarray oder, vorzugsweise, einem CCD (Charge-Coupled Device) bestehen.

15. Telemeter nach einem der Ansprüche 11 bis 14, **dadurch gekennzeichnet, dass** die beiden Schenkel des Gehäuses an einem Drehwinkelgeber (7) des Typs Potentiometer angelenkt sind, wobei der Körper des Drehwinkelgebers am Ende eines der Schenkel des Zirkels (4) befestigt ist, wohingegen das Ende des anderen Schenkels fest mit der Drehachse des Drehwinkelgebers (7) verbunden ist, sodass es möglich ist, zu jedem Zeitpunkt den Wert des Öffnungswinkels der Schenkel (4A, 4B) zu kennen.

**Claims**

1. A telemetric measurement method, allowing from a reference frame O linked to a device (4), to generate or to determine at least two lines of sight towards any two targeted points A and B of the space, to measure the distances OA and OB, to measure the angle AOB, to calculate the spatial distance between the points A and B, **characterized in that** it determines the pitching and rolling angles of the device (4), and makes it possible to deduce therefrom the segment AB misalignment with the horizontal or the vertical gravity.

2. A method of telemetric measurement according to claim 1, **characterized in that** the targets A and B are pointed preferentially by two laser light beams (R1 and R2), the spatial distance between the points A and B is then determined, using for example a one axis or preferably three axis inclinometer or accelerometer, φ, the angle of pitch and θ, the angle of roll are measured, then one calculates preferably with a calculator, the horizontality error (or misalignment with the horizontal) e by the formula:

$$e = (|\,OA\,| - |\,OB\,|).\,\text{Sin}\,\varphi + |\,AB\,|.\,\text{Sin}\,\theta$$

3. A Telemetric measurement method according to one of the claims 1 or 2, **characterized in that**, in order to determine the spatial distance between the points A and B, one determines from any spatial reference frame O two lines of sight towards any two real targeted points A and B of the space, or towards their virtual projection, which distance gap is to be measured so that the three points A, O, B form a general triangle contained in a plane in the space of any orientation, the angle of opening (α) between the two lines of sight OA and OB is measured and the length of at least one of the two lines of sight OA or OB is also measured, one calculates and then determines the spatial distance between the points A and B, by applying for example the vector addition laws or the law of the cosines, preferably by means of a calculator.

4. A Telemetric measurement method according to one of the preceding claims, **characterized in that** it makes it possible, from a reference frame O linked to a device, to generate or to determine at least two lines of sight OA and OB towards any two targeted points A and B of the space, to define two segments OD and OC included in the lines OA and OB respectively, to generate or determine from the ends D and C of said segments, at least two other lines of sight DB and CA, and then to measure the following ; (α), the opening angle between the two lines of sight OA and OB; (δ), the opening angles between the two lines of sight DA and DB, and (θ), the angle between the two lines of sight CA and CB, one calculates and then determine the lengths OA and OB by triangulation and the distance between the points A and B, applying for example the sine rule or the cosine law, preferably by means of a calculator.

5. A telemetric measurement method according to claim 4, **characterized in that** the segments OD and OC are materialized by the branches of a compass (4) articulated in O, the spatial distance between the points A and B is obtained by triangulation: the targets A and B are pointed first by preferentially two laser beams (R1 and R2) coming from at least one light source of origin O capable of performing a light scan of the line AB, (α) the opening angle between the two lines of sight OA and OB is then measured , and then crosswise from each of the ends C and D of the compass (4) one directs respectively an auxiliary beam (R3) towards the target A and an auxiliary beam (R4) towards the target B, after having determined the angles (δ) and (θ) for example respectively by means of coders (7a, 7b), the spatial distance between the points A and B, is then calculated and determined by the sinus rule or the cosine law, preferably by means of a calculator.

6. The telemetric measurement method according to claim 5, **characterized in that** the spatial distance between the points A and B is obtained by triangulation:

- After pointing the targets A and B by the main beams (R1 and R2), (α1), the opening angle between the sight lines OA and OB is measured and stored,
- the opening (α2) of the compass (4) is adjusted by rotating the branch (4B) around the reference frame O so as to direct from the end C of the compass (4) towards the target A, an auxiliary beam (R3) forming an angle of 90 ° with the branch (4B). (α2), the angle of opening between the two lines of sight OA and OC is then measured and stored,
- the target B is pointed again using the beam R2 collinear with the branch OC;
- the opening of the compass (4) is adjusted by rotating the other branch (4A) around the reference frame O so as to direct from the end D of the compass (4) towards the target B, an auxiliary beam (R4) forming an angle of 90 ° with the branch (4A), the opening angle between the two lines of sight OB and OD is then measured and stored;
- The length of the AB segment is calculated using the known parameters of the compass dimensions and the three memorized angles by applying a simple trigonometric calculation.

7. The telemetric measurement method according to claim 5, **characterized in that** the spatial distance between the points A and B is obtained by triangulation:

- After pointing the targets A and B by the main beams (R1 and R2), (α) the measurement of the opening angle between the lines of sight OA and OB is measured;
- the distances OA and OB are calculated from the reflected rays (R3, R4) respectively of the beams R1 and R2 on the target A or B and which strike photodetectors (10a, 10b) respectively located on the internal faces of the branches (4A, 4B) of compass 4,
- focusing the reflected beams R3 or R4 by means of an objective lens (L) on a detector located on each of the branches (4A, 4B) at a known distance (b) from the reference frame O;
- the angle of incidence (θ for the measurement on R3) of the light beam R3 which strikes the photosensitive surface of the photo-detector (10b) is coded according to the position of the point of impact (x) and the distance is deduced OA = R1: $R_1 = \dfrac{b\sin\theta}{\sin(\theta + \alpha)}$

- In the same way, the angle of incidence of the light beam R4 which strikes the photosensitive surface of the photodetector (10a) according to the position (x) of the point of impact is coded and the distance OB = R2 is deduced;
- knowing α, OA and OB, the spatial distance between the points A and B is then calculated, preferably by means of a calculator.

8. The telemetric measurement method according to claim 5, **characterized in that** the spatial distance between the points A and B is obtained by triangulation, after pointing the targets A and B by two preferentially laser light beams (11a and 11b) generated at the ends of the branches (4A, 4B), at a known distance (r) from the reference frame O, these light beams being parallel to each other and perpendicular to the plane containing the two branches (4A, 4B) so that the distance between the two light beams is maintained along the path of the said beams until they impact on the targets A and B, the opening angle (α) between the two branches (4A, 4B) is measured and validated, knowing the length, the spatial distance between points A and B is calculated and then determined, for example applying the sine rule or the cosine law, preferably by means of a calculator.

9. A rangefinder device enabling to measure distances, lengths, areas and levels, comprising means from a reference frame O attached to the rangefinder, to generate or to determine at least two lines of sight towards any two target points A and B of the space, measure the distances OA and OB, measure the angle AOB, calculate the spatial distance between the points A and B, **characterized in that** it has means to determine the angles of pitch and roll, to deduce the misalignment of the segment AB on the horizontal or vertical gravity.

10. The rangefinder according to claim 9, **characterized in that** it comprises:

   - means for determining, from any reference frame O of the space, two lines of sight towards two target points A and B of the space which distance gap is to be measured so that the three points A , O, B determine a general triangle contained in a plane of the space, of any orientation,
   - means for measuring, on the one hand, (α) the opening angle between the two lines of sight OA and OB, and on the other hand, measuring the length of at least one of the two lines of sight referred as OA or OB,
   - means for calculating and determining the spatial distance between the points A and B, consisting preferably of a calculator, for example by applying the vector addition laws , the rule of the sines or the law of the cosines,
   - means for determining the pitching and rolling angles, and
   - means for calculating, from these above mentioned values, the misalignment of the segment AB on the horizontal or gravitational vertical.

11. The Rangefinder according to one of the claims 9 or 10, **characterized in that** it consists of a housing comprising two branches (4A, 4B), the said housing thus having a shape of compass (4), these branches being hinged around an axis of rotation, and comprising, a light beam generator device capable of producing two divergent pointing beams (R1, R2) with a collinear direction with the length of the said branches, from a reference point of origin O, and arranged to allow to adjust the divergence angle (α) between 0 ° and 180 ° of these divergent beams, so that they can be pointed at real target points A and B distant one of the other, or to their virtual projection.

12. The rangefinder according to one of the claims 9 to 11, **characterized in that** the means for determining the pitching and rolling angles is by using an inclinometer or accelerometer, preferably having three axes, integrated in one of the branches (4A, 4B).

13. The rangefinder according to one of the claims 9 to 12, **characterized in that** each branch (4A, 4B) is provided with means for emitting at its free end, a light beam (R3, R4), which acts as a triangulation auxiliary with a rotating direction around the said free end and **in that** it comprises rotary knobs (9a, 9b) provided with encoders (7a, 7b) which perform the rotations of said auxiliary beams (R3, R4) and encode the angle of rotation.

14. The rangefinder according to claim 13, **characterized in that** it comprises photodetectors (10a, 10b) for receiving reflected rays R3, R4 for example consisting of PSDs (Position Sensitive Detector) or a linear array of diode or preferentially a CCD (Charged Coupled Device).

15. The rangefinder according to one of the claims 11 to 14, **characterized in that** the two branches of the housing are articulated around a potentiometer type angular encoder (7), the body of said angular encoder being fixed at the end of the one of the branches of the compass (4), while the end of the other branch is integral with the rotation axis of the angular encoder (7), thus enabling to know, at any time, the value of the angle opening said branches (4A, 4B).

Fig. 1a

Fig. 1b

Fig. 1c

Fig. 2a

Fig. 2b

Fig. 2c

Fig. 3

Fig. 4a

Fig.4b

Fig. 5

Fig. 6

Fig. 7a

Fig. 7b

Fig. 7c

Fig. 7d

Fig. 8a

Fig. 8b

Fig. 8c

Fig. 9a

Fig. 9b

Fig. 10

Fig. 11

Fig.12

Fig.13a

Fig.13b

**EP 2 645 056 B1**

## RÉFÉRENCES CITÉES DANS LA DESCRIPTION

### Documents brevets cités dans la description

- US 2004051860 A
- US 7706573 B
- EP 2037294 A2